# EUROPEAN PATENT APPLICATION

(11) **EP 4 772 576 A1**
(43) Date of publication of application: **08.07.2026**
(21) Application number: 24859808.8
(22) Date of filing: 28.08.2024
(51) Int. Cl.: C08L 33/06, B29B 17/00, B29C 45/00, C08F 220/14, C08J 11/12, C08K 7/14, C08L 25/12, C08L 51/00, C08L 51/06

(54) **(METH)ACRYLIC RESIN COMPOSITION, MOLDED BODY THEREOF, METHOD FOR PRODUCING MOLDED BODY, METHOD FOR DECOMPOSING AND RECOVERING (METH)ACRYLIC RESIN COMPOSITION, METHOD FOR RECYCLING (METH)ACRYLIC RESIN COMPOSITION, AND RECYCLED (METH)ACRYLIC RESIN COMPOSITION**

(30) Priority: 30.08.2023 JP 2023140200; 21.08.2024 JP 2024139714
(71) Applicant: Sumitomo Chemical Company, Limited, Tokyo 103-6020 (JP)
(72) Inventor: MINO, Takayuki, Niihama-shi, Ehime 792-8521 (JP); MATSUKI, Syuuhei, Niihama-shi, Ehime 792-8521 (JP)
(74) Representative: Vossius & Partner Patentanwälte Rechtsanwälte mbB
(86) International application number: PCT/JP2024/030618
(87) International publication number: WO 2025/047777

(57) **Abstract**

Provided are a molded body having excellent scattering preventing characteristics while enhancing impact resistance and rigidity, a (meth)acrylic resin composition capable of producing the molded body, a method for recycling the (meth)acrylic resin composition, a recycled (meth)acrylic resin composition, a method for producing the molded body, and a method for decomposing and recovering the (meth)acrylic resin composition. A (meth)acrylic resin composition containing: a (meth)acrylic resin in which a content of a structural unit derived from a (meth)acrylate is 90 to 99.985 mol%, and a content of a structural unit derived from (meth)acrylic acid is 0.015 to 9.0 mol%, with respect to a total content of 100 mol% of all structural units; and a fibrous glass filler, a method for recycling the (meth)acrylic resin composition, a recycled (meth)acrylic resin composition, a molded body of the (meth)acrylic resin composition, a method for producing the molded body, and a method for decomposing and recovering the (meth)acrylic resin composition.

## Description

### TECHNICAL FIELD

The present invention relates to a (meth)acrylic resin composition, a molded body using the (meth)acrylic resin composition, such as a car body, and a method for producing the molded body. The present invention also relates to a method for decomposing and recovering a (meth)acrylic resin composition. Furthermore, the present invention relates to a method for recycling a (meth)acrylic resin composition and a recycled (meth)acrylic resin composition.

### BACKGROUND ART

A (meth)acrylic resin is excellent in weather resistance, moldability, and the like, and is easily colored, and is therefore used for various applications. In particular, in recent years, since the (meth)acrylic resin is suitable for recycling in addition to excellent transparency, a technique for applying the (meth)acrylic resin to applications where other resins have been used has also been studied. For example, the (meth)acrylic resin has attracted attention as an alternative material to a hard resin such as an acrylonitrile-butadiene-styrene copolymer (ABS resin) used for OA equipment, automobile parts, building members (interior members), housings of electrical products, and the like because the (meth)acrylic resin is excellent in a balance among mechanical characteristics such as rigidity, strength, and impact resistance.

However, even when the (meth)acrylic resin is used for a conventional application or is applied as an alternative material, practically, the (meth)acrylic resin and a molded body thereof do not have sufficient impact resistance or rigidity, and an application thereof is limited. Therefore, with expansion of applications of the (meth)acrylic resin, a technique for enhancing impact resistance and rigidity has been studied.

As one of techniques for enhancing impact resistance and rigidity of the (meth)acrylic resin and a molded body thereof, a technique for adding a glass fiber to the (meth)acrylic resin is known, and various glass fiber-reinforced (meth)acrylic resin compositions and molded bodies thereof have been proposed. For example, Patent Document 1 describes a surface-cured glass fiber-reinforced acrylic resin plate as a surface-cured acrylic resin plate constituting an automobile sunroof. Patent Document 2 describes a method for producing "glass fiber-reinforced thermoplastic resin composition which has transparency and in which a refractive index of a resin component is substantially the same as that of a glass fiber due to mixing a transparent resin component obtained by uniformly mixing (A) 10 to 80% by weight (resin basis) of an acrylic resin mainly containing methyl methacrylate in which the content of methyl methacrylate is 84% by weight or more and (B) 90 to 20% by weight (resin basis) of a copolymer basically containing 88 to 73% by weight of styrene and 12 to 27% by weight of acrylonitrile, and 5 to 60% by weight (total composition basis) of glass fiber in a molten state". Patent Document 3 describes "glass fiber-reinforced acrylic resin composition containing a methacrylic resin having a ring structure in a main chain and a fibrous glass filler".

### PRIOR ART DOCUMENTS

### PATENT DOCUMENTS

Patent Document 1: JP-A-03-034327
Patent Document 2: JP-A-05-331335
Patent Document 3: JP-A-2022-158606

### SUMMARY OF THE INVENTION

### PROBLEMS TO BE SOLVED BY THE INVENTION

By the way, when a resin molded body used for various applications as described above is subjected to an impact, if the resin molded body is broken or crushed and fragments thereof are scattered, there is a risk of causing a human or physical secondary damage. Therefore, in addition to being excellent in characteristics such as impact resistance and rigidity, the resin molded body is required to have characteristics in which the resin molded body is less likely to be broken or crushed even when subjected to an impact, and fragments thereof do not scatter even if broken or crushed (hereinafter, also simply referred to as "scattering preventing characteristics"). However, in Patent Documents 1 to 3, scattering preventing characteristics at the time of being subjected to an impact are not examined.

In addition, with a recent increase in resource prices and an increase in awareness of environmental problems, a technique for recovering and recycling molded bodies used for various applications as described above has been put into practical use. Examples of a method for recycling a (meth)acrylic resin include material recycling in which a recovered molded body is molded again to produce a new molded body, chemical recycling in which a (meth)acrylate or the like constituting a (meth)acrylic resin is recovered from a recovered molded body and polymerized to obtain a (meth)acrylic resin, and thermal recycling in which a recovered molded body is used as fuel. Among these, material recycling has a large advantage in reducing an environmental load and constructing a recycling-oriented society because a recovered (meth)acrylic resin is reused as it is. However, a recovered normal (meth)acrylic resin (not containing a glass fiber) usually has lower physical properties and characteristics than an unused (meth)acrylic resin, and in particular, a recovered glass fiber-reinforced (meth)acrylic resin has a large tendency to lower physical properties and characteristics. Therefore, it is not easy to implement material recycling of a recovered (meth)acrylic resin, and the recovered (meth)acrylic resin is currently subjected to chemical recycling or thermal recycling.

An object of the present invention is to provide a molded body which is excellent in scattering preventing characteristics while enhancing impact resistance and rigidity, and a (meth)acrylic resin composition capable of producing the molded body. Another object of the present invention is to provide a method for producing the molded body and a method for decomposing and recovering the (meth)acrylic resin composition. Still another object of the present invention is to provide a recycling method for recovering a (meth)acrylic resin composition from the (meth)acrylic resin composition, a molded body thereof, or the like, and a recycled (meth)acrylic resin composition using a recovered (meth)acrylic resin composition.

### MEANS FOR SOLVING THE PROBLEMS

That is, the objects of the present invention have been achieved by the following means.
<1> A (meth)acrylic resin composition containing: a (meth)acrylic resin in which a content of a structural unit derived from a (meth)acrylate is 90 to 99.985 mol%, and a content of a structural unit derived from (meth)acrylic acid is 0.015 to 9.0 mol%, with respect to a total content 100 mol% of all structural units; and a fibrous glass filler.
<2> The (meth)acrylic resin composition according to <1>, wherein the content of the structural unit derived from a (meth)acrylate is 90 to 99.0 mol%, and
   the content of the structural unit derived from (meth)acrylic acid is 0.1 to 9.0 mol%.
<3> The (meth)acrylic resin composition according to <1> or <2>, wherein a content of the fibrous glass filler is 1 to 40 parts by mass in 100 parts by mass of the (meth)acrylic resin composition.
<4> The (meth)acrylic resin composition according to any one of <1> to <3>, wherein the fibrous glass filler has a fiber diameter of 3 to 25 µm and a fiber length of 0.1 to 10 mm.
<5> The (meth)acrylic resin composition according to any one of <1> to <3>, wherein the fibrous glass filler has a fiber diameter of 3 to 25 µm and a fiber length of 0.5 to 10 mm.
<6> The (meth)acrylic resin composition according to any one of <1> to <5>, wherein the fibrous glass filler contains a glass filler having a flat cross-sectional shape in which a ratio of a major axis to a minor axis [major axis/minor axis] in a cross section is 2.0 or more.
<7> The (meth)acrylic resin composition according to any one of <1> to <6>, wherein the (meth)acrylic resin contains a ring structure formed of glutaric anhydride in a main chain, and a content of a structural unit containing the ring structure is 1.0 mol% or less with respect to a total of 100 mol% of all structural units of the (meth)acrylic resin.
<8> The (meth)acrylic resin composition according to any one of <1> to <7>, wherein the (meth)acrylate is at least one selected from the group consisting of methyl (meth)acrylate, ethyl (meth)acrylate, n-propyl (meth)acrylate, iso-propyl (meth)acrylate, n-butyl (meth)acrylate, tert-butyl (meth)acrylate, sec-butyl (meth)acrylate, iso-butyl (meth)acrylate, and 2-ethylhexyl (meth)acrylate.
<9> The (meth)acrylic resin composition according to any one of <1> to <8>, further containing a styrene copolymer, wherein the styrene copolymer is a styrene-acrylonitrile copolymer or a styrene-acrylonitrile-phenylmaleimide copolymer.
<10> The (meth)acrylic resin composition according to any one of <1> to <9>, further containing (meth)acrylic rubber particles, wherein the (meth)acrylic rubber particles are spherical (meth)acrylic rubber particles having a three-layer structure including an inner layer formed of a hard polymer mainly containing an alkyl methacrylate, an intermediate layer formed of an elastic copolymer mainly containing an alkyl acrylate, and an outer layer formed of a hard polymer mainly containing an alkyl methacrylate.
<11> A molded body containing the (meth)acrylic resin composition according to any one of <1> to <10>.
<12> A car body containing the (meth)acrylic resin composition according to any one of <1> to <10>.
<13> A method for producing a molded body by injection-molding the (meth)acrylic resin composition according to any one of <1> to <10>, the method including: performing an injection step using a rapid heating and cooling die when a die cavity surface temperature is 110°C or higher; and performing a die opening step when the die cavity surface temperature is 80°C or lower.
<14> A method for producing a molded body by extrusion-molding the (meth)acrylic resin composition according to any one of <1> to <10>, the method including: a step of discharging a melt of the (meth)acrylic resin composition from the die; and a step of cooling the discharged melt to obtain a molded body.
<15> A method for decomposing and recovering a (meth)acrylic resin composition, the method including decomposing the (meth)acrylic resin composition according to any one of <1> to <10> at a temperature of 380°C or higher to separate a volatile component and a solid material from each other, thereby recovering a (meth)acrylate.
<16> A recycled (meth)acrylic resin composition containing: the (meth)acrylic resin composition according to any one of <1> to <10> or a molded body thereof or a (meth)acrylic resin composition recovered from the following already-recycled (meth)acrylic resin composition or a molded body thereof, an unused (meth)acrylic resin, and an unused fibrous glass filler.
   (Already-recycled (meth)acrylic resin composition)
   An already-recycled (meth)acrylic resin composition containing a (meth)acrylic resin composition recovered from the (meth)acrylic resin composition according to any one of <1> to <10> or a molded body thereof, an unused (meth)acrylic resin, and an unused fibrous glass filler.
   The already-recycled (meth)acrylic resin composition includes recycled (meth)acrylic resin compositions according to the following <17> to <19>.
<17> The recycled (meth)acrylic resin composition according to <16>, wherein the unused (meth)acrylic resin contained in the recycled (meth)acrylic resin composition contains a (meth)acrylic resin in which a content of a structural unit derived from a (meth)acrylate is 90 to 99.985 mol%, and a content of a structural unit derived from (meth)acrylic acid is 0.015 to 9.0 mol%, with respect to 100 mol% of a total content of all structural units.
<18> The recycled (meth)acrylic resin composition according to <16> or <17>, wherein a content of a fibrous glass filler contained in the recovered (meth)acrylic resin composition in 100 parts by mass of the recovered (meth)acrylic resin composition is equal to a content of the unused fibrous glass filler in 100 parts by mass of a total of the unused (meth)acrylic resin and the unused fibrous glass filler in the recycled (meth)acrylic resin composition.
<19> The recycled (meth)acrylic resin composition according to any one of <16> to <18>, wherein a content of the unused fibrous glass filler is 1 to 40 parts by mass in 100 parts by mass of a total of the unused (meth)acrylic resin and the unused fibrous glass filler in the recycled (meth)acrylic resin composition.
<20> The recycled (meth)acrylic resin composition according to any one of <16> to <19>, wherein
   in 100% by mass of the recycled (meth)acrylic resin composition,
   a content of the recovered (meth)acrylic resin composition is 1 to 99% by mass, and
   a total content of the unused (meth)acrylic resin and the unused fibrous glass filler is 1 to 99% by mass.
<21> A recycling method for recycling a (meth)acrylic resin composition or a (meth)acrylic resin composition forming a molded body, the method including:
   recovering a (meth)acrylic resin composition from the (meth)acrylic resin composition according to any one of <1> to <10> or a molded body thereof or from the recycled (meth)acrylic resin composition according to any one of <16> to <19> or a molded body thereof; and
   mixing the recovered (meth)acrylic resin composition, an unused (meth)acrylic resin, and an unused fibrous glass filler.

One aspect of the method for recycling a (meth)acrylic resin composition according to <21> is the following recycling method.

That is, a recycling method for recycling a (meth)acrylic resin composition or a (meth)acrylic resin composition forming a molded body, the method including:
recovering a (meth)acrylic resin composition from the (meth)acrylic resin composition according to any one of <1> to <10> or a molded body thereof or from the following already-recycled (meth)acrylic resin composition or a molded body thereof; and
mixing the recovered (meth)acrylic resin composition, an unused (meth)acrylic resin, and an unused fibrous glass filler.

### (Already-recycled (meth)acrylic resin composition)

An already-recycled (meth)acrylic resin composition containing a (meth)acrylic resin composition recovered from the (meth)acrylic resin composition according to any one of <1> to <10> or a molded body thereof, an unused (meth)acrylic resin, and an unused fibrous glass filler.

### EFFECT OF THE INVENTION

The present invention can provide a molded body which is excellent in scattering preventing characteristics while enhancing impact resistance and rigidity, and a (meth)acrylic resin composition capable of producing the molded body. The present invention can also provide a method for producing the molded body and a method for decomposing and recovering the (meth)acrylic resin composition. The present invention can further provide a recycling method for recovering a (meth)acrylic resin composition from the (meth)acrylic resin composition, a molded body thereof, or the like, and a recycled (meth)acrylic resin composition using a recovered (meth)acrylic resin composition.

### MODE FOR CARRYING OUT THE INVENTION

In the present invention and the present specification, "(meth)acrylic resin" means one or both of an acrylic resin and a methacrylic resin. The same applies to "(meth)acrylate" and "(meth)acrylic acid".

In addition, in the present invention and the present specification, a bonding form (arrangement of structural units) of two or more structural units in a copolymer to be a resin or an elastomer is not particularly limited, and examples thereof include a random bond (random copolymer), a block bond (block copolymer), an alternating bond (alternating copolymer), and a graft bond (graft copolymer).

In the present invention and the present specification, in a case where a content, physical properties, and the like are described by indicating a numerical range, when an upper limit value and a lower limit value of the numerical range are separately described, any upper limit value and any lower limit value can be appropriately combined to set a specific numerical range. On the other hand, when a plurality of numerical ranges represented by using "to" are set and described, an upper limit value and a lower limit value forming a numerical range are not limited to a specific combination described before and after "to" as a specific numerical range, and a numerical range in which an upper limit value and a lower limit value of each numerical range are appropriately combined can be set. Note that, in the present invention and the present specification, a numerical range represented by using "to" means a range including numerical values described before and after "to" as a lower limit value and an upper limit value.

In the present invention and the present specification, "unused (meth)acrylic resin" refers to a (meth)acrylic resin that has not been used for preparation of a (meth)acrylic resin composition and production (molding) of a molded body, and examples thereof include a (meth)acrylic resin obtained by polymerization or an isolated and purified product thereof, and a commercially available (meth)acrylic resin. "Recovered (meth)acrylic resin" means a (meth)acrylic resin recovered from a waste such as a residue generated in preparation of a (meth)acrylic resin composition (including a recycled (meth)acrylic resin composition), a waste such as a fragment, a defective product, or a residue generated in production of a molded body (including a recycled molded body), a molded body (including a recycled molded body) discarded from a consumer, and the like. On the other hand, "recycled (meth)acrylic resin" means a (regenerated) (meth)acrylic resin that contains a recovered (meth)acrylic resin and can be reused for preparation of a new (meth)acrylic resin composition and the like.

The same applies to each component used for preparing the (meth)acrylic resin composition of the present invention.

"Unused (meth)acrylic resin composition" refers to a (meth)acrylic resin composition that is not molded as a molded body or the like, and examples thereof include a (meth)acrylic resin composition obtained by preparation. "Recovered (meth)acrylic resin composition" means a recovered (meth)acrylic resin composition regenerated by a normal method and under normal conditions, preferably by a recovery step of the recycling method of the present invention from a waste generated in preparation of a (meth)acrylic resin composition (including a recycled (meth)acrylic resin composition), a waste generated in production of a molded body (including a recycled molded body), a molded body (including a recycled molded body) discarded from a consumer, and the like. On the other hand, "recycled (meth)acrylic resin composition" means a (meth)acrylic resin composition that contains the recovered (meth)acrylic resin composition and can be reused for production of a new molded body and the like.

In the present invention, the waste, the molded body, and the like to be recovered include those containing a recovered (meth)acrylic resin composition that has already been recovered at least once. Therefore, in the present invention, the recycled (meth)acrylic resin includes both those containing a recovered (meth)acrylic resin that has been recovered once and those containing a recovered (meth)acrylic resin that has been recovered twice or more. Similarly, the recycled (meth)acrylic resin composition of the present invention includes both a resin composition containing a recovered (meth)acrylic resin composition that has been recovered once and a resin composition containing a recovered (meth)acrylic resin composition that has been recovered twice or more. Note that, in the resin composition containing a recovered (meth)acrylic resin composition that has been recovered twice or more, for distinguishment from a recycled (meth)acrylic resin composition to be prepared, a resin composition that is used for preparation of the resin composition and contains a (previous generation) recycled (meth)acrylic resin composition that has already been regenerated may be referred to as "already-recycled (meth)acrylic resin composition".

Further, "unused molded body" refers to a molded body that is molded as a molded body but is not used as a resin member for a product, a semi-product, or the like. "Recovered molded body" means a molded body recovered as a waste generated in production of a molded body or the like, or a molded body discarded from a consumer and recovered. On the other hand, "recycled molded body" means a molded body obtained by molding a recycled (meth)acrylic resin composition.

In the present invention and the present specification, "(meth)acrylic resin" can include "unused (meth)acrylic resin", "recovered (meth)acrylic resin" described later, and "recycled (meth)acrylic resin" described later, but "(meth)acrylic resin" is used as a term meaning "unused (meth)acrylic resin" unless otherwise specified.

Similarly, "(meth)acrylic resin composition" can include "unused (meth)acrylic resin composition", "recovered (meth)acrylic resin composition" described later, and "recycled (meth)acrylic resin composition" described later, but "(meth)acrylic resin composition" is used as a term meaning "unused (meth)acrylic resin composition" unless otherwise specified. Note that, when the (meth)acrylic resin composition means a recycled (meth)acrylic resin composition, the content of a recovered (meth)acrylic resin composition in 100% by mass of the recycled (meth)acrylic resin composition is, for example, less than 1% by mass.

Furthermore, "molded body" can include "unused molded body", "recovered molded body", and "recycled molded body", but "molded body" is used as a term meaning "unused molded body" unless otherwise specified.

### [[(Meth)acrylic resin composition]]

The (meth)acrylic resin composition of the present invention (hereinafter, also referred to as "resin composition of the present invention") contains a (meth)acrylic resin and a fibrous glass filler described later. In the resin composition of the present invention, it is considered that by use of a (meth)acrylic resin having a predetermined content of a structural unit derived from (meth)acrylic acid in addition to a structural unit derived from a (meth)acrylate in combination with a fibrous glass filler, interfacial strength between the fibrous glass filler and the (meth)acrylic resin is enhanced, and excellent scattering preventing characteristics can be achieved while impact resistance and rigidity are enhanced.

First, components contained in the resin composition of the present invention will be described.

The resin composition of the present invention may contain one kind or two or more kinds for each component.

### [(Meth)acrylic resin]

The (meth)acrylic resin contained in the resin composition of the present invention has a structural unit derived from a (meth)acrylate and a structural unit derived from (meth)acrylic acid, and may further have a structural unit containing a ring structure described later and a structural unit other than these (hereinafter, also referred to as "other structural unit"). In the (meth)acrylic resin, the content of a structural unit derived from a (meth)acrylate is 90 to 99.985 mol%, and the content of a structural unit derived from (meth)acrylic acid is 0.015 to 9.0 mol%, with respect to a total content 100 mol% of all structural units forming the (meth)acrylic resin. The (meth)acrylic resin having this composition is used in combination with a fibrous glass filler as described above, whereby a molded body of the (meth)acrylic resin can exhibit excellent impact resistance and rigidity and excellent scattering preventing characteristics.

### <Structural unit derived from (meth)acrylate>

The (meth)acrylate from which the structural unit derived from the (meth)acrylate is derived is not particularly limited, and examples thereof include an alkyl (meth)acrylate and an aryl (meth)acrylate, and an alkyl (meth)acrylate is preferable. The alkyl group constituting the alkyl (meth)acrylate is not particularly limited, but is preferably an alkyl group with 1 to 8 carbon atoms. Examples of the alkyl (meth)acrylate include methyl (meth)acrylate, ethyl (meth)acrylate, n-propyl (meth)acrylate, iso-propyl (meth)acrylate, n-butyl (meth)acrylate, tert-butyl (meth)acrylate, sec-butyl (meth)acrylate, iso-butyl (meth)acrylate, 2-ethylhexyl (meth)acrylate, cyclohexyl methacrylate, lauryl methacrylate, and benzyl methacrylate. As the (meth)acrylate, methyl (meth)acrylate, ethyl (meth)acrylate, n-propyl (meth)acrylate, iso-propyl (meth)acrylate, n-butyl (meth)acrylate, tert-butyl (meth)acrylate, sec-butyl (meth)acrylate, iso-butyl (meth)acrylate, or 2-ethylhexyl (meth)acrylate is preferably contained, methyl (meth)acrylate is more preferably contained, and methyl methacrylate is still more preferably contained.

The (meth)acrylate may have a substituent.

The (meth)acrylic resin may contain one kind or two or more kinds of structural units derived from the (meth)acrylate.

### <Structural unit derived from (meth)acrylic acid>

The (meth)acrylic acid from which the structural unit derived from (meth)acrylic acid is derived is not particularly limited, and examples thereof include acrylic acid and methacrylic acid, and methacrylic acid is preferable.

The (meth)acrylic acid may have a substituent.

The (meth)acrylic resin may contain one kind or two or more kinds of structural units derived from the (meth)acrylic acid.

### <Structural unit containing ring structure>

The (meth)acrylic resin can contain a ring structure in a main chain thereof. In the present invention, inclusion (incorporation) of a ring structure in a main chain of the (meth)acrylic resin means that a partial structure bonded to a carbon atom constituting a carbon chain to be the main chain of the (meth)acrylic resin forms a ring structure together with the carbon atom. This ring structure is preferably incorporated in the main chain of the (meth)acrylic resin by having a structural unit containing the ring structure.

Since the structural unit containing a ring structure affects impact resistance and rigidity of the (meth)acrylic resin, the (meth)acrylic resin can contain the structural unit or can contain no structural unit in consideration of desired impact resistance and rigidity, a balance therebetween, and the like. When the structural unit containing a ring structure is contained in the (meth)acrylic resin in consideration of a balance between impact resistance and rigidity and the like, as the structural unit containing a ring structure, one or more structural units containing a ring structure formed of a cyclic anhydride compound is preferably contained, and a structural unit containing a ring structure formed of a glutaric anhydride compound is more preferably contained among structural units containing a ring structure described later in that excellent scattering preventing characteristics can be achieved while both impact resistance and rigidity are achieved in a well-balanced manner. On the other hand, when the structural unit containing a ring structure is not contained in the (meth)acrylic resin in consideration of a balance between impact resistance and rigidity and the like, the structural unit containing a ring structure that is not contained is preferably a structural unit containing a ring structure formed of a glutaric anhydride compound, more preferably a structural unit containing a ring structure formed of a cyclic anhydride compound, and still more preferably a structural unit containing the following ring structure among structural units containing a ring structure described later.

The ring structure is not particularly limited, but examples thereof include: a ring structure formed of a cyclic imide such as maleimide or glutarimide; a ring structure formed of a cyclic acid anhydride such as maleic anhydride or glutaric anhydride; a ring structure formed of a cyclic amide (for example, a lactam ring structure); and a cyclic ester ring structure such as a ring structure formed of a lactone. Examples of the cyclic acid anhydride include acid anhydrides of unsaturated carboxylic acids, and preferable examples thereof include maleic anhydride and itaconic anhydride. Examples of the maleimide include N-substituted maleimides such as phenylmaleimide, cyclohexylmaleimide, and methylmaleimide.

Each compound forming the ring structure may have an appropriate substituent.

The (meth)acrylic resin may contain one kind or two or more kinds of ring structures (structural units containing a ring structure).

Examples of the structural unit having a ring structure formed of glutarimide and the structural unit having a ring structure formed of glutaric anhydride include a structural unit represented by the following formula (A).

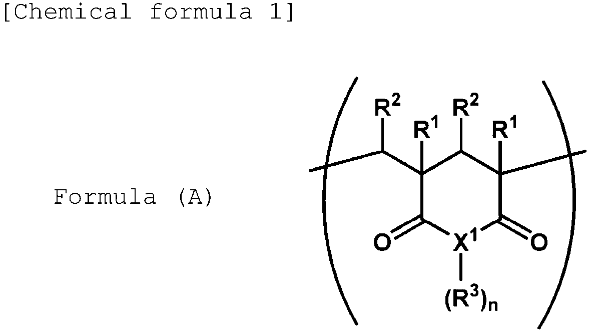

In the formula (A), R¹ and R² each independently represent a hydrogen atom or an alkyl group, and R³ represents a hydrogen atom or a substituent. X¹ represents an oxygen atom or a nitrogen atom. When X¹ is an oxygen atom, n is 0, and when X¹ is a nitrogen atom, n is 1.

The alkyl group that can be R¹ and R² and the substituent that can be R³ are not particularly limited, and for example, the content of the formula (1) described in Patent Document 3 can be appropriately referred to, and the content is incorporated as it is as a part of description of the present specification.

In the present invention, the structural unit having a ring structure represented by the formula (A) is preferably a structural unit having a ring structure formed of glutaric anhydride in which two R¹s are methyl groups, two R²s are hydrogen atoms, and X¹ is an oxygen atom.

Examples of the structural unit having a ring structure formed of maleimide and the structural unit having a ring structure formed of maleic anhydride include a structural unit represented by the following formula (B).

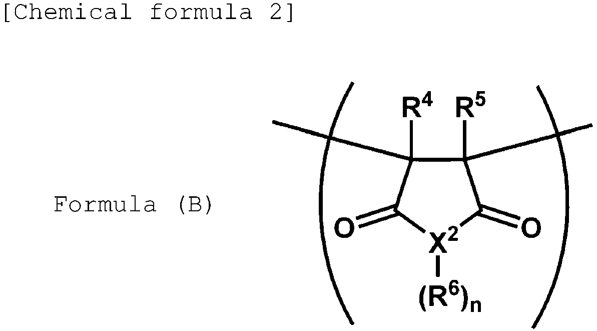

In the formula (B), R⁴ and R⁵ each independently represent a hydrogen atom or a methyl group, R⁶ represents a hydrogen atom or a substituent, and X² represents an oxygen atom or a nitrogen atom. When X² is an oxygen atom, n is 0, and when X² is a nitrogen atom, n is 1.

A substituent that can be R⁶ is not particularly limited, and for example, the content of the formula (2) described in Patent Document 3 can be appropriately referred to, and the content is incorporated as it is as a part of description of the present specification.

In the present invention, the structural unit having a ring structure represented by the formula (B) is preferably a structural unit having a ring structure formed of maleic anhydride in which both R⁴ and R⁵ are hydrogen atoms and X² is an oxygen atom.

The ring structure formed of a lactone and the ring structure formed of a cyclic amide (pyrrolidinone) are not particularly limited, and for example, the content of a lactone ring structure and a pyrrolidinone ring structure described in Patent Document 3 can be appropriately referred to, and the content is incorporated as it is as a part of description of the present specification.

The (meth)acrylic resin may contain one kind or two or more kinds of the structural units containing a ring structure.

The ring structure included in a main chain of the (meth)acrylic resin can be formed by an appropriate method, for example, various methods described in Patent Document 3, and the content described in Patent Document 3 is incorporated as it is as a part of the description of the present specification.

### <Other structural unit>

The (meth)acrylic resin may contain another structural unit. A compound (monomer) from which another structural unit is derived is not particularly limited as long as the compound is copolymerizable with a (meth)acrylate and/or (meth)acrylic acid, and examples thereof include a monofunctional monomer having one polymerizable carbon-carbon double bond in a molecule thereof and a polyfunctional monomer having two or more polymerizable carbon-carbon double bonds in a molecule thereof. Examples of such a monofunctional monomer include aromatic vinyl compounds such as styrene and α-methylstyrene; vinyl cyan compounds such as (meth)acrylonitrile and (meth)acrylamide; and unsaturated carboxylic acids such as maleic acid and itaconic acid ((meth)acrylic acid and an anhydride of an unsaturated carboxylic acid are excluded). Examples of the polyfunctional monomer include: polyunsaturated carboxylates of polyhydric alcohols, such as ethylene glycol dimethacrylate, butanediol dimethacrylate, and trimethylolpropane triacrylate; alkenyl esters of unsaturated carboxylic acids, such as allyl acrylate, allyl methacrylate, and allyl cinnamate; polyalkenyl esters of polybasic acids, such as diallyl phthalate, diallyl maleate, triallyl cyanurate, and triallyl isocyanurate; and aromatic polyalkenyl compounds such as divinylbenzene.

The (meth)acrylic resin may contain one kind or two or more kinds of the other structural units.

As the (meth)acrylic resin, a methacrylic resin is preferable from a viewpoint of having excellent scattering preventing characteristics, impact resistance, and rigidity, and a resin formed of a copolymer of at least one methacrylate and methacrylic acid is more preferable. Each of the methacrylic resin and the resin formed of the copolymer more preferably contains methyl methacrylate. Note that, in the present invention, the methacrylic resin refers to a resin containing a structural unit derived from a methacrylic monomer such as a methacrylate or methacrylic acid in a higher content than a structural unit derived from an acrylic monomer such as an acrylate or acrylic acid.

The content of each structural unit in a total of 100 mol% of all structural units constituting the (meth)acrylic resin is appropriately set, but is preferably set in the following range.

In 100 mol% of the total content of all the structural units constituting the (meth)acrylic resin, the content of the structural unit derived from a (meth)acrylate is 90 to 99.985 mol%, preferably 90 to 99.8 mol%, more preferably 90 to 99.0 mol%, still more preferably 92 to 98.0 mol%, and particularly preferably 93.0 to 97.0 mol% in that excellent scattering preventing characteristics can be achieved while excellent impact resistance and rigidity are maintained.

In 100 mol% of the total content of all the structural units constituting the (meth)acrylic resin, the content of the structural unit derived from (meth)acrylic acid is 0.015 to 9.0 mol%, preferably 0.05 to 9.0 mol%, more preferably 0.1 to 9.0 mol%, still more preferably 0.2 to 8.0 mol%, and particularly preferably 0.3 to 5.0 mol% in that a tendency to contribute to improvement of impact resistance, particularly scattering preventing characteristics is strong, and excellent scattering preventing characteristics can be achieved while excellent impact resistance and rigidity are maintained.

When the (meth)acrylic resin composition of the present invention contains a resin other than a (meth)acrylic resin, the content (% by mass) of a structural unit derived from (meth)acrylic acid in the whole resin can be calculated from a product of the content (% by mass) obtained by converting the content (mol%) in the (meth)acrylic resin on a mass basis and the content (% by mass) of the (meth)acrylic resin in the whole resin. The content (% by mass) of the structural unit derived from (meth)acrylic acid in the whole resin is not particularly limited, but can be, for example, 0.01 to 10% by mass, is preferably 0.1 to 10.0% by mass, more preferably 0.2 to 8.0% by mass, and still more preferably 0.3 to 5.0% by mass in that excellent scattering preventing characteristics can be achieved while excellent impact resistance and rigidity are maintained.

In 100 mol% of the total content of all the structural units constituting the (meth)acrylic resin, the content of the structural unit containing a ring structure is not particularly limited, and is appropriately determined in consideration of a balance between impact resistance and rigidity. For example, when the (meth)acrylic resin contains a structural unit containing a ring structure, in 100 mol% of the total content, the content of the structural unit containing a ring structure can be, for example, 10 to 80 mol%, and is preferably 20 to 60 mol%. On the other hand, when the (meth)acrylic resin contains a reduced amount of the structural unit containing a ring structure, in 100 mol% of the total content, the content of the structural unit containing a ring structure is, for example, preferably 1.0 mol% or less, more preferably 0.7 mol% or less, and still more preferably 0.5 mol% or less from a viewpoint of a balance between impact resistance and rigidity. A lower limit value of the content of the structural unit containing a ring structure only needs to be more than 0 mol%, and can be, for example, 0.001 mol% or more. Among structural units containing a ring structure, the content of a structural unit having a ring structure formed of a glutaric anhydride compound is appropriately determined in consideration of presence or absence of a structural unit having another ring structure, the content of the structural unit having the above ring structure, and the like, but is preferably within the above range.

In 100 mol% of the total content of all the structural units constituting the (meth)acrylic resin, the content of another structural unit is appropriately determined according to applications, characteristics, and the like, and is, for example, preferably 0.1 to 1.0 mol%, more preferably 0.2 to 0.8 mol%, and still more preferably 0.3 to 0.7 mol%.

The content of each component can be calculated from the use amount of a compound from which each component to be subjected to polymerization is derived, and can be measured by a known method. For example, a component derived from (meth)acrylic acid can be calculated by measurement of a nuclear magnetic resonance spectrum (¹³C-NMR) in Examples described later.

Note that, when the (meth)acrylic resin contains two or more kinds for each component, the content of each component is the total content of the two or more kinds of components.

The characteristics and physical properties of the (meth)acrylic resin are not particularly limited, and are appropriately determined according to applications, characteristics (for example, impact resistance and rigidity) of a molded body, and the like. For example, a weight average molecular weight of the (meth)acrylic resin is not particularly limited, but can be 5 × 10⁴ to 2 × 10⁵.

As the (meth)acrylic resin, a commercially available product can be used, or a synthetic product appropriately synthesized can be used. When the (meth)acrylic resin is synthesized, the (meth)acrylic resin can be produced by polymerizing a (meth)acrylate and (meth)acrylic acid, in addition, a compound from which a structural unit containing a ring structure is derived, and appropriately a compound from which another structural unit is derived by a conventionally known method such as a bulk polymerization method, a suspension polymerization method, an emulsion polymerization method, or a solution polymerization method. In the method for producing the (meth)acrylic resin, for example, additives such as a polymerization initiator, a chain transfer agent, and a suspension stabilizer may be used. A polymerization temperature is not particularly limited, and can be, for example, 110 to 190°C.

### [Fibrous glass filler]

The fibrous glass filler contained in the composition of the present invention is not particularly limited, and may be in any form such as roving, chopped strand, middle fiber, glass bead, surfacing mat, chopped strand mat, satin weave, lattice weave, plain weave, punching plain weave, twill weave, or net. A glass material forming the fibrous glass filler is not particularly limited, and for example, quartz glass, borosilicate glass, fluorosilicate glass, alkali-free glass, alkali-containing glass (for example, soda glass), potash lime glass, and lead glass are preferably used. As the fibrous glass filler, an (alkali-free glass fiber) such as E-GF, S-GF, or T-GF, and an (alkali-containing glass fiber) such as C-GF are preferably used. When a glass material is surface-treated, a surface treatment agent is not particularly limited, and examples thereof include various coupling agents, and a silane-based coupling agent is preferable.

The shape of the fibrous glass filler is not particularly limited as long as the fibrous glass filler is fibrous, and examples of a cross-sectional shape thereof include a circular shape, an elliptical shape, and a flat shape.

One of preferable aspects is that the fibrous glass filler contains a fibrous glass filler having a flat cross-sectional shape (also referred to as "flat fibrous glass filler" in the present invention). This flat fibrous glass filler can reduce a difference in characteristics between a transverse direction (TD direction) and a machine direction (MD direction), for example, a difference in rigidity (flexural modulus) and a difference in strength (Charpy impact strength), which are caused by arrangement anisotropy of the fibrous glass filler when a molded body is formed by an injection molding method or an extrusion molding method.

The size of the fibrous glass filler is not particularly limited, and can be appropriately set. For example, as a fiber length, 0.5 to 10 mm is one of preferable aspects, and 0.1 to 10 mm is another one of the preferable aspects.

A fiber diameter is preferably 3 to 25 µm.

As for the flat fibrous glass filler, in addition to or instead of the fiber diameter, a ratio of a major axis to a minor axis [major axis/minor axis] in a cross section thereof can be specified. The ratio [major axis/minor axis] is not particularly limited, but is preferably 2.0 or more from a viewpoint of a difference in characteristics between the TD direction and the MD direction. In the present invention, the ratio of a major axis to a minor axis [major axis/minor axis] in a cross section refers to a ratio [major axis/minor axis] of a major axis (corresponding to a maximum length of the cross section in a longitudinal direction, that is, a maximum height of the cross section when the flat fibrous glass filler is disposed such that a major axis direction is vertical) to a minor axis (corresponding to a maximum length of the cross section in a short direction, that is, a maximum width of the cross section when the flat fibrous glass filler is disposed such that a short diameter direction is horizontal) in a cross section crossing an axis of the fibrous glass filler, usually a perpendicular cross section, and indicates a flattening ratio of a cross section in the flat fibrous glass filler. As the ratio [major axis/minor axis] approaches 1.0, the cross-sectional shape becomes circular. The ratio [major axis/minor axis] is more preferably 2.5 or more. On the other hand, an upper limit value of the ratio [major axis/minor axis] is not particularly limited, can be 8.0 or less, is preferably 5.0 or less, and is more preferably 4.5 or less.

The ratio [major axis/minor axis] of one flat fibrous glass filler can be determined by microscopically observing an arbitrary flat cross section of the flat fibrous glass filler, measuring a minor axis thereof and a major axis thereof, and dividing the major axis by the minor axis. In the present invention, the ratio [major axis/minor axis] of the flat fibrous glass fillers is a value obtained by arithmetically averaging the ratios [major axis/minor axis] of a plurality of flat fibrous glass fillers, for example, ten flat fibrous glass fillers, to be measured.

The shape of the flat cross section can be a shape in which a circular cross section is collapsed in one diametrical direction, and examples thereof include a (substantially) rectangular shape, a (substantially) oval shape in which four corners of a rectangular shape are chamfered, an elliptical shape, and a shape (cocoon shape) in which centers of these shapes are constricted, and a (substantially) rectangular shape or a (substantially) oval shape is preferable. Note that, in the present invention, the shape indicating a cross-sectional shape, such as a cocoon shape, includes a shape that is partially deformed as long as the shape is maintained as a whole, in addition to a geometrically accurate shape. A cross section of a flat fiber used for calculating the ratio [major axis/minor axis] may be a cross section obtained by cutting the flat fiber (taken out from a molded body), or may be a cross section of the flat fiber appearing on a cut surface obtained by cutting a molded body.

Note that, in the present invention, when a commercially available fibrous glass filler is used, as a fiber length and a fiber diameter of the fibrous glass filler, catalog values can be adopted, and the ratio [major axis/minor axis] may be calculated as described above, or a catalog value may be adopted.

The fibrous glass filler preferably contains 35 to 100% by mass of silicon dioxide (SiO₂), 0 to 30% by mass of aluminum oxide (Al₂O₃), 0 to 15% by mass of boron oxide (B₂O₃), and 0 to 65% by mass of other materials (magnesium oxide, zinc oxide, barium oxide, and the like).

The flat fibrous glass filler can be produced, for example, by performing spinning using a nozzle having an appropriate pore shape such as an oval shape, a cocoon shape, an elliptical shape, or a rectangular slit shape as a bushing used for discharging a melt. The flat fibrous glass filler can also be produced by spinning a melt from a plurality of closely disposed nozzles having various cross-sectional shapes (including a circular cross section) and joining spun melt filaments to each other to form a single filament. For such a producing technique, for example, contents described in JP-A-7-291649 and JP-A-2000-344541 can be appropriately referred to, and the contents are incorporated as they are as a part of description of the present specification.

### [Styrene copolymer]

The resin composition of the present invention may contain, as a resin component, a styrene copolymer (resin thereof) in addition to the (meth)acrylic resin described above. The styrene copolymer only needs to be a copolymer having a structural unit derived from a styrene compound (note that those corresponding to the (meth)acrylic resin described above are excluded), and examples thereof include a styrene-methyl methacrylate copolymer, a styrene-acrylonitrile copolymer, a styrene-acrylonitrile-phenylmaleimide copolymer, an acrylonitrile-butadiene-styrene block copolymer (ABS resin), and an acrylatestyrene-acrylonitrile copolymer (ASA resin), and a styrene-acrylonitrile copolymer or a styrene-acrylonitrile-phenylmaleimide copolymer is preferable.

In the styrene-acrylonitrile copolymer or the styrene-acrylonitrile-phenylmaleimide copolymer, preferably, styrene is 65 to 90% by mass and acrylonitrile is 10 to 35% by mass, and more preferably, styrene is 70 to 85% by mass and acrylonitrile is 15 to 30% by mass, with respect to total 100% by mass of styrene and acrylonitrile. Note that the contents of butadiene, acrylate, and phenylmaleimide in an ABS resin, an ASA resin, and a styrene-acrylonitrile-phenylmaleimide copolymer are not particularly limited, and are appropriately determined.

### [(Meth)acrylic rubber particles]

The resin composition of the present invention may contain (meth)acrylic rubber particles. The (meth)acrylic rubber particles are different from the (meth)acrylic resin in that the (meth)acrylic rubber particles do not contain a structural unit derived from (meth)acrylic acid.

The (meth)acrylic rubber particles are not particularly limited, but are preferably spherical (meth)acrylic rubber particles having a three-layer structure including an inner layer formed of a hard polymer mainly containing an alkyl methacrylate, an intermediate layer formed of an elastic copolymer mainly containing an alkyl acrylate, and an outer layer formed of a hard polymer mainly containing an alkyl methacrylate. The spherical (meth)acrylic rubber particles having a three-layer structure (hereinafter, also referred to as "(meth)acrylic rubber particles (B)") have a so-called core-shell structure.

In the (meth)acrylic rubber particles (B), the inner layer is a hard polymer mainly containing an alkyl methacrylate. The hard polymer layer is preferably formed by polymerizing monomers containing 70 to 100% by mass of an alkyl methacrylate and 0 to 30% by mass of other vinyl monomers copolymerizable therewith. As the alkyl methacrylate, an ester having an alkyl group with about 1 to 4 carbon atoms, particularly methyl methacrylate is advantageous. Examples of optionally used other vinyl monomers include acrylates such as methyl acrylate, ethyl acrylate, butyl acrylate, and cyclohexyl acrylate, aromatic vinyl compounds such as styrene, and vinyl cyan compounds such as acrylonitrile.

It is also effective to use a copolymerizable crosslinkable monomer as one of the other vinyl monomers. The crosslinkable monomer only needs to have at least two polymerizable carbon-carbon double bonds in one molecule thereof, and examples thereof include the polyfunctional monomers described in the (meth)acrylic resin. Among these, an alkenyl ester of an unsaturated carboxylic acid and a polyalkenyl ester of a polybasic acid are preferable. These crosslinkable monomers can be used singly or in combination of two or more kinds thereof as necessary.

The intermediate layer of the (meth)acrylic rubber particles (B) is formed of an elastic copolymer mainly containing an alkyl acrylate. Specifically, the intermediate layer is preferably a layer of an elastic copolymer obtained by polymerizing monomers containing 50 to 99.9% by mass of an alkyl acrylate, 0 to 49.9% by mass of other vinyl monomers copolymerizable therewith, and 0.1 to 10% by mass of copolymerizable crosslinkable monomers. The intermediate layer can be formed by polymerizing a monomer mixture having the composition described here in the presence of the hard polymer constituting the inner layer. As long as the compositions of the alkyl acrylate, the other vinyl monomer, and the crosslinkable monomer fall within the above ranges, respectively, two or more kinds of alkyl acrylates falling within the definition, two or more kinds of other vinyl monomers falling within the definition, and two or more kinds of crosslinkable monomers falling within the definition may be used.

Examples of the alkyl acrylate used here include those having an alkyl group with 1 to 8 carbon atoms. Among these, those having an alkyl group with 4 to 8 carbon atoms, such as butyl acrylate and 2-ethylhexyl acrylate, are preferable.

The other vinyl monomer which is used as desired for constituting an elastic copolymer and is copolymerizable with an alkyl acrylate is a monofunctional compound having one polymerizable carbon-carbon double bond in one molecule thereof, and specific examples thereof include methacrylates such as methyl methacrylate, butyl methacrylate, and cyclohexyl methacrylate, aromatic vinyl compounds such as styrene, and vinyl cyan compounds such as acrylonitrile.

The copolymerizable crosslinkable monomer used for constituting an elastic copolymer only needs to have at least two polymerizable carbon-carbon double bonds in one molecule thereof, and those similar to those exemplified above as optional components constituting the hard polymer layer of the inner layer can be used. Also for the elastic copolymer of the intermediate layer, an alkenyl ester of an unsaturated carboxylic acid or a polyalkenyl ester of a polybasic acid is preferably used.

The (meth)acrylic rubber particles (B) have a layer formed of a hard polymer mainly containing an alkyl methacrylate on a further outer side of the intermediate layer formed of the elastic copolymer. The outer layer is preferably formed by polymerizing monomers containing 50 to 100% by mass of an alkyl methacrylate, 0 to 50% by mass of an acrylate, and 0 to 49% by mass of at least one of other vinyl monomers copolymerizable therewith in the presence of the polymers formed as the inner layer and the intermediate layer. As a result, at least one polymerized layer formed of the monomers described here is bonded to a surface of the elastic copolymer constituting the intermediate layer.

The alkyl methacrylate as a main component of the outer layer is preferably an ester having an alkyl group with about 1 to 8 carbon atoms, and examples thereof include methyl methacrylate, ethyl methacrylate, butyl methacrylate, 2-ethylhexyl methacrylate, and cyclohexyl methacrylate. Examples of the optionally used acrylate include alkyl acrylates such as methyl acrylate, ethyl acrylate, butyl acrylate, and cyclohexyl acrylate, and examples of the optionally used other vinyl monomer copolymerizable with an alkyl methacrylate and/or an acrylate include aromatic vinyl compounds such as styrene and vinyl cyan compounds such as acrylonitrile.

For the (meth)acrylic rubber particles (B) having a three-layer structure as described above, for example, the content of JP-A-55-27576 can be appropriately referred to, and the content is incorporated as it is as a part of description of the present specification. In particular, a composition described in Example 3 of JP-A-55-27576 is one of preferable compositions.

In the (meth)acrylic rubber particles (B), a mass ratio of inner layer/intermediate layer/outer layer is not particularly limited and can be appropriately set, but is preferably, for example, 30 to 40/40 to 50/10 to 30. By setting the mass ratio among the inner layer, the intermediate layer, and the outer layer within the above range, hardness and impact resistance of a molded body formed of the (meth)acrylic resin composition of the present invention can be enhanced.

The (meth)acrylic rubber particles (B) can be produced by, for example, first polymerizing a monomer to be an inner layer by an emulsion polymerization method or the like, polymerizing a monomer to be an intermediate layer in the presence of the resulting polymer particles, and then further polymerizing a monomer to be an outer layer in the presence of the polymer particles formed up to the intermediate layer. At this time, the particle diameters of the (meth)acrylic rubber particles (B) can be adjusted by adjusting the addition amount of an emulsifier, the input amounts of the monomers, and the like.

The particle diameters of the (meth)acrylic rubber particles (B) are not particularly limited and can be appropriately determined. As the particle diameters of the (meth)acrylic rubber particles (B), for example, particle diameters up to the intermediate layer are preferably in a range of 0.2 to 0.30 µm on a weight average in that excellent action and effect by the (meth)acrylic resin and the fibrous glass filler can be maintained.

### [Other component]

The (meth)acrylic resin composition of the present invention may contain a component other than the above-described components (hereinafter, also referred to as "other component"). The other component is not particularly limited, and examples thereof include components that can be generally used in a resin composition, and examples thereof include a release agent, an anti-stick agent, an ultraviolet absorber, a lubricant, an antioxidant, a plasticizer, an antistatic agent, a dye (pigment), a neutralizing agent, an ultraviolet absorber, a lubricant, a nucleating agent, a pressure-sensitive adhesive, an antifogging agent, an anti-blocking agent, a melt flow rate adjusting agent, and a solvent.

Examples of the release agent include a higher fatty acid ester, a higher aliphatic alcohol, a higher fatty acid, a higher fatty acid amide, a higher fatty acid metal salt, and a fatty acid derivative. Examples of the ultraviolet absorber include a benzophenone ultraviolet absorber, a cyanoacrylate ultraviolet absorber, a benzotriazole ultraviolet absorber, a malonate ultraviolet absorber, and an oxalanilide ultraviolet absorber. Examples of the antioxidant include a phenol-based antioxidant, a sulfur-based antioxidant, and a phosphorus-based antioxidant. Examples of the lubricant include silicone oil and a polysiloxane compound. Examples of the antistatic agent include conductive inorganic particles, a tertiary amine, a quaternary ammonium salt, a cationic acrylate derivative, and a cationic vinyl ether derivative.

The (meth)acrylic resin composition may contain one kind or two or more kinds for each of the other components.

In the present invention, the other component may be mixed with a (meth)acrylic resin or the like at the time of preparing the (meth)acrylic resin composition, or may be mixed with a (meth)acrylic resin in advance prior to preparation of the (meth)acrylic resin composition.

### [Composition of (meth)acrylic resin composition]

The composition of the present invention only needs to contain the (meth)acrylic resin described above and the fibrous glass filler described above, and the content of each component (composition of the composition) is not particularly limited and is appropriately determined according to applications, characteristics of a molded body (for example, impact resistance and rigidity), and the like, and is preferably set to, for example, the following range.

The content of the (meth)acrylic resin in 100 parts by mass of the composition of the present invention is preferably 10 to 90 parts by mass in that excellent scattering preventing characteristics can be achieved while impact resistance and rigidity are enhanced, and more preferably 60 to 85 parts by mass and still more preferably 70 to 80 parts by mass in that all of impact resistance, rigidity, and scattering preventing characteristics can be exhibited at a higher level.

The content of the fibrous glass filler in 100 parts by mass of the composition of the present invention is preferably 1 to 40 parts by mass in that excellent scattering preventing characteristics can be achieved while impact resistance and rigidity are enhanced, and more preferably 10 to 35 parts by mass and still more preferably 15 to 30 parts by mass in that all of impact resistance, rigidity, and scattering preventing characteristics can be exhibited at a higher level.

In the composition of the present invention, a ratio of the content of the (meth)acrylic resin to the content of the fibrous glass filler [content of (meth)acrylic resin/content of fibrous glass filler] is appropriately determined in consideration of the contents described above, and can be, for example, 65/35 to 90/10, and is preferably 70/30 to 85/15.

The content of a styrene copolymer in 100 parts by mass of the composition of the present invention is preferably 80 parts by mass or less, more preferably 10 to 75 parts by mass, and still more preferably 15 to 70 parts by mass in that excellent action and effect by the (meth)acrylic resin and the fibrous glass filler can be maintained. The content of a styrene-acrylonitrile copolymer and the content of a styrene-acrylonitrile-phenylmaleimide copolymer are each appropriately determined in consideration of the content of the styrene copolymer.

The content of (meth)acrylic rubber particles in 100 parts by mass of the composition of the present invention is preferably 70 parts by mass or less, more preferably 5 to 65 parts by mass, and still more preferably 10 to 60 parts by mass in that excellent action and effect by the (meth)acrylic resin and the fibrous glass filler can be maintained.

The content of other components in 100 parts by mass of the composition of the present invention is appropriately determined as long as the action and effect of the present invention are not impaired, and can be, for example, 0.5 parts by mass or less.

### [Preparation of (meth)acrylic resin composition]

The (meth)acrylic resin composition of the present invention can be produced by a known method, and usually can be prepared by mixing or kneading a (meth)acrylic resin, a fibrous glass filler, and appropriately other components.

A mixing method and a kneading method are not particularly limited, and for example, a conventionally known appropriate method such as a melt-kneading method can be adopted. As a device used for mixing and kneading, a conventionally known mixer or kneader can be used, and examples thereof include a single screw kneader, a twin screw kneader, a multi-screw extruder, a Henschel mixer, a Banbury mixer, a kneader, and a roll mill. When it is necessary to further increase a rotation speed in a kneading method, for example, a high shearing device can be used. A kneading temperature is not particularly limited, and can be appropriately set in consideration of a selected component, an amount thereof, properties thereof, and the like, and can be set to, for example, 200 to 280°C.

Note that, in the preparation of the (meth)acrylic resin composition, a recovered component (for example, a recovered (meth)acrylic resin) and a recycled component (for example, a recycled (meth)acrylic resin) can be used as each component, but in the present invention, an unused component is usually used.

### [[Molded body]]

The molded body of the present invention is a molded body containing the (meth)acrylic resin composition of the present invention described above, and is usually a molded body obtained by molding the (meth)acrylic resin composition of the present invention by a known molding method. The molded body of the present invention has excellent impact resistance, rigidity, and scattering preventing characteristics, and has an excellent feature that it is possible to perform (material) recycling of a (meth)acrylic resin composition, recovery of a (meth)acrylate in the (meth)acrylic resin composition, and (chemical) recycling.

Therefore, the molded body of the present invention can be used for various applications, and is molded in a form, shape, and dimension suitable for each application. Examples of the shape include a sheet shape (which includes a film shape, a strip shape, and a plate shape, and may be long or short (sheet)), a block shape, and various three-dimensional shapes.

The molded body of the present invention can be used for various applications, for example, applications in which impact resistance and rigidity are required, outdoor applications, and alternative applications of various resins such as an ABS resin, in addition to conventional applications of a (meth)acrylic resin, by utilizing the excellent feature. Examples thereof include: a car body (a vehicle outer layer member or a vehicle body member) such as a tail lamp cover, a headlamp cover, a visor, or a fender; a vehicle interior member such as a cover of a meter panel; a battery member such as a battery housing; an optical member such as a lens, a display protective plate, an optical film, or a light guide plate; OA equipment; a cosmetic container member and a construction member (interior member); a housing of electrical appliance; and a member that requires scattering preventing characteristics and is disposed outdoors (for example, a signboard, a soundproof wall, a resin-made outer wall sheet material of an agricultural house, or a roof material of a carport or a garage). The molded body of the present invention is preferably applied to a car body in that the excellent feature can be effectively used.

The molded body of the present invention may be a molded body formed only of a molded product containing the (meth)acrylic resin composition of the present invention, or may be a molded body containing the molded product and another member. Examples of the other member include a surface layer (coating layer) and a colored layer. The molded body of the present invention may be subjected to a surface treatment such as hard coat, a water repellent treatment, a hydrophilic treatment, or a photocatalytic treatment as necessary.

### [Method for producing molded body]

A method for producing the molded body of the present invention is not particularly limited, and a known molding method can be applied. For example, a press molding method, an extrusion molding method, or an injection molding method can be applied. Molding conditions in each molding method are not particularly limited as long as the (meth)acrylic resin composition of the present invention can be molded in a molten state, and can be appropriately set according to the composition, physical properties, and the like of the (meth)acrylic resin composition of the present invention.

Note that, in the method for producing the molded body, as the (meth)acrylic resin composition, a recovered (meth)acrylic resin composition and a recycled (meth)acrylic resin composition can be used, but in the present invention, an unused (meth)acrylic resin composition is usually used.

### <Injection molding method (heat and cool molding method)>

One of preferable forms of the molded body of the present invention is that the molded body is produced by an injection molding method. Specifically, an injection molding method (heat and cool molding method) in which an injection step of the (meth)acrylic resin composition of the present invention is performed using a rapid heating and cooling die when a die cavity surface temperature is 110°C or higher, and then a die opening step is performed when the die cavity surface temperature is 80°C or lower is preferable. When a resin composition containing a fibrous glass filler is molded, irregularities, roughness, and the like are usually generated on a surface of a molded body by the fibrous glass filler. However, when the (meth)acrylic resin composition of the present invention is molded by the above-described heat and cool molding method, a surface of a resulting molded body is a mirror surface, and a molded body having an excellent appearance is obtained.

As the rapid heating and cooling die used in the heat and cool molding method, various known dies having an internal space (cavity) matching the shape and dimension of a molded body to be molded can be used without particular limitation.

In the injection step, the (meth)acrylic resin composition of the present invention is injected into a rapid heating and cooling die in which a cavity surface temperature is heated to 110°C or higher. The cavity surface temperature at the time of injection is determined according to the composition, physical properties, and the like of the (meth)acrylic resin composition of the present invention, and is, for example, preferably 115°C or higher. The cavity surface temperature is not particularly limited, and can be, for example, 140°C or lower, and is preferably 130°C or lower. In the injection step, injection conditions other than the cavity surface temperature, for example, an injection speed, an injection pressure, a holding pressure, and the like can be appropriately set according to the composition, physical properties, and the like of the (meth)acrylic resin composition of the present invention. Examples thereof include injection conditions in Examples described later.

In the die opening step, the rapid heating and cooling die is opened after the die cavity surface temperature is cooled to 80°C or lower. The cavity surface temperature when the die is opened is not particularly limited as long as it is 80°C or lower, and can be, for example, 75°C or lower, and is preferably 70°C or lower. In the die opening step, conditions other than the cavity surface temperature are not particularly limited, and can be appropriately set.

### <Extrusion molding method>

One of preferable forms of the molded body of the present invention is that the molded body is produced by an extrusion molding method from a viewpoint of excellent productivity. Specifically, a method including a step of discharging a melt of the (meth)acrylic resin composition of the present invention from a die and a step of cooling the discharged melt to obtain a molded body is preferable.

As the extruder used in the extrusion molding method, a known extruder such as a single screw extruder, a twin screw extruder, or a multi-screw extruder can be used.

Discharge conditions in the discharge step only need to be conditions under which the (meth)acrylic resin composition of the present invention can be discharged from a die in a molten state, and are determined according to the composition, physical properties, and the like of the (meth)acrylic resin composition of the present invention. For example, a heating temperature (discharge temperature) of the (meth)acrylic resin composition of the present invention can be 200 to 290°C. Discharge conditions other than the heating temperature, for example, a discharge speed (extrusion speed), a screw rotation speed, and the like can be appropriately set according to the composition, physical properties, and the like of the (meth)acrylic resin composition of the present invention. A cooling method in the step of obtaining a molded body is not particularly limited, and a known cooling method such as air cooling, water cooling, or forced cooling by a cooler can be applied. Cooling conditions at this time, for example, a cooling rate, a cooling temperature, and the like can be appropriately set according to the composition, physical properties, and the like of the (meth)acrylic resin composition of the present invention.

### [[Method for decomposing and recovering (meth)acrylic resin composition]]

The (meth)acrylic resin composition of the present invention may be discarded or incinerated, but is desirably recycled from a viewpoint of reduction of environmental load (environmental protection), construction of a recycling-oriented society (sustainable society), and the like. The present inventors have conducted studies and found that a (meth)acrylate can be recovered and recycled from the (meth)acrylic resin composition of the present invention by the following method.

In the method for decomposing and recovering the (meth)acrylic resin composition of the present invention, the (meth)acrylic resin composition of the present invention is decomposed at a temperature of 380°C or higher, and a resulting volatile component and solid material are separated from each other. By such a decomposition and recovery method of the present invention, a (meth)acrylate contained in a poly(meth)acrylic resin composition can be chemically recycled.

The heating temperature (decomposition temperature) of the (meth)acrylic resin composition of the present invention only needs to be 380°C or higher, and is appropriately determined according to the kinds (boiling point, decomposition temperature, and the like) of a (meth)acrylic resin, a styrene copolymer, (meth)acrylic rubber particles, and the like contained in the (meth)acrylic resin composition. For example, a temperature at which the (meth)acrylic resin is decomposed and a resulting (meth)acrylate is gaseous is preferable, and specifically, the temperature is preferably 385°C or higher, and more preferably 390°C or higher. An upper limit of the heating temperature is not particularly limited, and is, for example, preferably 500°C or lower, and more preferably 460°C or lower. A heating time is not particularly limited, and can be appropriately determined according to the degree of decomposition of the (meth)acrylic resin and the like. For example, the heating time can be 5 to 20 minutes. In this way, the (meth)acrylic resin forming the (meth)acrylic resin composition of the present invention can be thermally decomposed into a (meth)acrylate.

In the decomposition and recovery method of the present invention, a resulting volatile component and solid material are separated from each other during or after thermal decomposition of the (meth)acrylic resin. For this separation, various known separation methods can be applied, but gas-solid separation is preferably performed by bringing a (meth)acrylate into a gas state as a volatile component, and bringing the other components into a solid state at the decomposition temperature.

In the decomposition and recovery method of the present invention, a step other than the decomposition and separation step can also be performed. Examples thereof include a step of purifying a recovered (meth)acrylate and a step of cutting a molded body containing the (meth)acrylic resin composition of the present invention.

In the decomposition and recovery method of the present invention, the (meth)acrylic resin composition of the present invention and the molded body of the present invention can be decomposed and recovered by the simple step of decomposition and separation described above, and specifically, a (meth)acrylate can be separated and recovered from the (meth)acrylic resin composition of the present invention and the molded body of the present invention.

The decomposition and recovery method of the present invention can also be applied to the molded body of the present invention, and for example, similarly to the (meth)acrylic resin composition of the present invention, a (meth)acrylate can also be recovered and recycled from the molded body of the present invention (including a nonstandard product thereof, a production intermediates, a production waste, a used recovered product, and the like) by the method. The decomposition and recovery method of the present invention can also be applied to a recovered (meth)acrylic resin composition and a recycled (meth)acrylic resin composition described later in place of an unused (meth)acrylic resin composition, as well as a recovered molded body and a recycled molded body, as an object to be applied. In this case, a (meth)acrylate can be recovered and recycled by the method in which the composition or the molded body is used as an application target in place of the (meth)acrylic resin composition of the present invention.

### [Recycled (meth)acrylic resin composition]

The recycled (meth)acrylic resin composition of the present invention is a resin composition containing a recovered (meth)acrylic resin composition. The recovered (meth)acrylic resin composition includes one kind or two or more kinds of the (meth)acrylic resin composition of the present invention (corresponding to the already-recycled (meth)acrylic resin composition) or a molded body thereof, and a recovered (meth)acrylic resin composition recovered from the recycled (meth)acrylic resin composition of the present invention or a recycled molded body thereof. That is, the recovered (meth)acrylic resin composition includes a waste generated in preparation of the (meth)acrylic resin composition of the present invention, a waste generated in production of the molded body of the present invention, a recovered (meth)acrylic resin composition recovered from the molded body of the present invention or the like discarded from a consumer, a waste generated in preparation of a recycled (meth)acrylic resin composition that has already been recycled, a waste generated in production of a recycled molded body, and a recovered (meth)acrylic resin composition recovered from a recycled molded body or the like discarded from a consumer.

The recycled (meth)acrylic resin composition of the present invention is a resin composition containing a (meth)acrylic resin composition recovered and recycled from the (meth)acrylic resin composition of the present invention or the molded body of the present invention, the recycled (meth)acrylic resin composition of the present invention (corresponding to the already-recycled (meth)acrylic resin composition) or a recycled molded body, or the like, and an unused (meth)acrylic resin and an unused fibrous glass filler as virgin materials. Even when the recycled (meth)acrylic resin composition of the present invention contains a recovered (meth)acrylic resin composition, the recycled (meth)acrylic resin composition of the present invention satisfies excellent level of impact resistance, rigidity, and scattering preventing characteristics exhibited by the (meth)acrylic resin composition of the present invention, and therefore can achieve excellent scattering preventing characteristics while enhancing impact resistance and rigidity.

In the recycled (meth)acrylic resin composition of the present invention, components contained in a recovered (meth)acrylic resin composition may be integrally contained (present or scattered) or independently contained.

A recovery source and the number of times of recovery (recycling number) of a recovered (meth)acrylic resin composition contained in the recycled (meth)acrylic resin composition of the present invention are not particularly limited. For example, the number of times of recovery of the recovered (meth)acrylic resin composition is preferably set within a range in which the recycled (meth)acrylic resin composition of the present invention satisfies excellent level of impact resistance, rigidity, and scattering preventing characteristics exhibited by the (meth)acrylic resin composition of the present invention. The number of times of recovery depends on, for example, the composition and physical properties of the recycled (meth)acrylic resin composition, and is preferably 2 to 10 times, for example, from a viewpoint of impact resistance, rigidity, and scattering preventing characteristics. When the recycled (meth)acrylic resin composition of the present invention contains a recovered (meth)acrylic resin composition recovered a plurality of times, the recovered (meth)acrylic resin composition contained in the recycled (meth)acrylic resin composition of the present invention may contain recovered (meth)acrylic resin compositions with the same number of times of recovery, or may contain a plurality of kinds of recovered (meth)acrylic resin compositions with different number of times of recovery.

The unused (meth)acrylic resin contained in the recycled (meth)acrylic resin composition of the present invention is not particularly limited, and an appropriate (meth)acrylic resin can be used. However, the recycled (meth)acrylic resin composition of the present invention preferably contains the (meth)acrylic resin of the present invention, that is, a (meth)acrylic resin in which the content of a structural unit derived from a (meth)acrylate is 90 to 99.985 mol% and the content of a structural unit derived from (meth)acrylic acid is 0.015 to 9.0 mol%, with respect to 100 mol% of the total content of all structural units, from a viewpoint of impact resistance, rigidity, and scattering preventing characteristics. Details of the (meth)acrylic resin of the present invention are as described above.

The unused fibrous glass filler contained in the recycled (meth)acrylic resin composition of the present invention is not particularly limited, but is preferably the above-described fibrous glass filler.

The recycled (meth)acrylic resin composition of the present invention may contain an unused styrene copolymer, unused (meth)acrylic rubber particles, and unused other components. These unused components are as described above.

The recycled (meth)acrylic resin composition of the present invention may contain one kind or two or more kinds for each component.

### [Composition of recycled (meth)acrylic resin composition]

The recycled (meth)acrylic resin composition of the present invention only needs to contain the recovered (meth)acrylic resin composition described above, an unused (meth)acrylic resin, and an unused fibrous glass filler, and is determined to have an appropriate composition (contained component and content) according to applications, characteristics (for example, impact resistance and rigidity) of a molded body, and the like. The composition of the recycled (meth)acrylic resin composition of the present invention (including the composition of the already-recycled (meth)acrylic resin composition of the present invention regardless of the number of times of recovery of a recovered (meth)acrylic resin composition contained. The same applies hereinafter) preferably satisfies a preferable range as an excellent level in evaluation of scattering preventing characteristics, impact resistance, and rigidity in Examples described later. The composition of the recycled (meth)acrylic resin composition of the present invention more preferably satisfies the composition (contained component and content) in the above range described in the (unused) (meth)acrylic resin composition of the present invention, and still more preferably has the same composition (contained component and content) as the (unused) (meth)acrylic resin composition of the present invention. The composition of the (unused) (meth)acrylic resin composition of the present invention is as described above.

In the present invention, as for the contained component, the "same composition" refers to identity for both the components of the (meth)acrylic resin and the fibrous glass filler, and identity for the styrene copolymer, the (meth)acrylic rubber particles, and other components described above does not matter. Note that the present invention preferably has identity for the styrene copolymer and/or the (meth)acrylic rubber particles in addition to both the components of the (meth)acrylic resin and the fibrous glass filler. The (meth)acrylic resin or the fibrous glass filler may be altered by recycling the (meth)acrylic resin composition or the like of the present invention, but in the present invention, identity of components is determined by identity in an unused state.

In the recycled (meth)acrylic resin composition of the present invention, the content of a fibrous glass filler derived from a recovered (meth)acrylic resin composition and the content of an unused fibrous glass filler contained in a recycled (meth)acrylic resin composition are preferably the same in that all of impact resistance, rigidity, and scattering preventing characteristics can be exhibited at an excellent level. That is, the content of a recovered fibrous glass filler contained in the recovered (meth)acrylic resin composition in 100 parts by mass of the recovered (meth)acrylic resin composition is preferably equal to the content of an unused fibrous glass filler in 100 parts by mass of a total of the unused (meth)acrylic resin and the unused fibrous glass filler contained in the recycled (meth)acrylic resin composition. At this time, the content of the recovered fibrous glass filler and the content of the unused fibrous glass filler can each be in the same range as the content of the (unused) fibrous glass filler in the (meth)acrylic resin composition of the present invention. For example, in the recycled (meth)acrylic resin composition of the present invention, the content of an unused fibrous glass filler in 100 parts by mass of a total of the unused (meth)acrylic resin and the unused fibrous glass filler is preferably 1 to 40 parts by mass in that all of impact resistance, rigidity, and scattering preventing characteristics can be exhibited at an excellent level, and a more preferable range and a still more preferable range are as described above.

In the recycled (meth)acrylic resin composition of the present invention, the content of the recovered (meth)acrylic resin composition, the content of the unused (meth)acrylic resin, and the content of the unused fibrous glass filler are each not particularly limited, and can be appropriately set.

For example, in 100% by mass of the recycled (meth)acrylic resin composition, the content of the recovered (meth)acrylic resin composition is preferably 1 to 99% by mass, more preferably 3 to 90% by mass, still more preferably 5 to 80, and particularly preferably 10 to 70 in that all of impact resistance, rigidity, and scattering preventing characteristics can be exhibited at an excellent level. At this time, the content of the recovered (meth)acrylic resin and the content of the recovered fibrous glass filler in the recovered (meth)acrylic resin composition can be appropriately set, but are preferably the above respective contents in the (meth)acrylic resin composition of the present invention.

In 100% by mass of the recycled (meth)acrylic resin composition, the total content of the unused (meth)acrylic resin and the unused fibrous glass filler is preferably 1 to 99% by mass, more preferably 10 to 97% by mass, still more preferably 20 to 95, and particularly preferably 30 to 90 in that all of impact resistance, rigidity, and scattering preventing characteristics can be exhibited at an excellent level. At this time, the content of the unused (meth)acrylic resin and the content of the unused fibrous glass filler in the total content can be appropriately set, but are preferably the above respective contents in the (meth)acrylic resin composition of the present invention.

When the recycled (meth)acrylic resin composition of the present invention contains at least one of an unused styrene copolymer, unused (meth)acrylic rubber particles, and an unused other component, the total content of an unused (meth)acrylic resin, an unused fibrous glass filler, the unused styrene copolymer, the unused (meth)acrylic rubber particles, and the unused other component (that is, the total content of components other than the recovered (meth)acrylic resin composition in the recycled (meth)acrylic resin composition of the present invention) is preferably set to be in the same range as the total content of the unused (meth)acrylic resin and the unused fibrous glass filler in 100% by mass of the recycled (meth)acrylic resin composition. The content of each unused component at this time is not particularly limited, and can be appropriately set. When the total mass of the components other than the recovered (meth)acrylic resin composition in the recycled (meth)acrylic resin composition of the present invention is taken as 100% by mass, each content is preferably set to the above each content in the above-described (meth)acrylic resin composition of the present invention. Note that the content of the recovered (meth)acrylic resin composition is as described above.

### [Preparation of recycled (meth)acrylic resin composition]

The recycled (meth)acrylic resin composition of the present invention can be prepared in a similar manner to preparation of the (meth)acrylic resin composition of the present invention except that a recovered (meth)acrylic resin composition, an unused (meth)acrylic resin, and an unused fibrous glass filler, and appropriately, an unused styrene copolymer, unused (meth)acrylic rubber particles, unused other components, and the like are used. In the present invention, it is preferable to prepare the recycled (meth)acrylic resin composition by the recycling method of the present invention described later.

The unused components used for preparing the recycled (meth)acrylic resin composition of the present invention may be mixed with the recovered (meth)acrylic resin composition singly, or may be mixed as a mixture obtained by mixing two or more kinds of unused components in advance.

### [[Recycled molded body]]

The recycled molded body of the present invention is a molded body containing the recycled (meth)acrylic resin composition of the present invention described above, and is usually a molded body obtained by molding the recycled (meth)acrylic resin composition of the present invention by a known molding method. The recycled molded body of the present invention has excellent impact resistance, rigidity, and scattering preventing characteristics, and has an excellent feature that it is possible to perform (material) recycling of a recycled (meth)acrylic resin composition and recovery of a (meth)acrylate in the (meth)acrylic resin composition, and to perform (chemical) recycling again (a plurality of times). Therefore, the recycled molded body of the present invention can be used for various applications similarly to the molded body of the present invention. The form, shape, and dimension of the recycled molded body of the present invention are similar to those of the molded body of the present invention.

### [Method for producing recycled molded body]

A method for producing a recycled molded body of the present invention is not particularly limited, and is similar to the method for producing a molded body of the present invention except that the recycled (meth)acrylic resin composition of the present invention is used.

### [[Recycling method]]

The method for recycling a (meth)acrylic resin composition of the present invention (also simply referred to as "recycling method of the present invention") is a method for recycling a (meth)acrylic resin composition, in which a (meth)acrylic resin composition or a (meth)acrylic resin composition forming a molded body is subjected to (material) recycling.

The recycling method of the present invention has been completed by finding that even when the (meth)acrylic resin composition of the present invention is recovered once or a plurality of times, a recycled molded body exhibiting desired impact resistance, rigidity, and scattering preventing characteristics can be formed without significantly impairing the characteristics of the (meth)acrylic resin composition before recovery by use in combination with an unused (meth)acrylic resin composition and an unused fibrous glass filler.

In the recycling method of the present invention, a recycled (meth)acrylic resin composition or a recycled molded body that has already been recycled can be used as an object to be treated, and in this case, the (meth)acrylic resin composition can be repeatedly recycled a plurality of times. That is, as the (meth)acrylic resin composition and the molded body used in the recycling method of the present invention, one kind or two or more kinds can be appropriately selected from the (meth)acrylic resin composition of the present invention or a molded body thereof, and the recycled (meth)acrylic resin composition of the present invention or a recycled molded body thereof. The number of times of recycling (the number of times of recovery) of the recycled (meth)acrylic resin composition or the recycled molded body used in the recycling method of the present invention is not particularly limited, and can be appropriately determined within a range in which a molded body formed using a resulting recycled (meth)acrylic resin composition exhibits excellent impact resistance, rigidity, and scattering preventing characteristics. For example, the number of times of recycling can be the same as the number of times of recovery in the recovered (meth)acrylic resin composition described above.

### [Recovering step]

In the recycling method of the present invention, first, a (meth)acrylic resin composition is recovered from at least one of the (meth)acrylic resin composition of the present invention or a molded body thereof and the recycled (meth)acrylic resin composition of the present invention or a recycled molded body thereof.

A recovery method and recovery conditions are not particularly limited, and each resin composition or each molded body may be once melt-mixed and recovered as a molten mixture (including strands, pellets, and the like), but it is preferable to recover and collect each resin composition or each molded body in a form of each resin composition or in a form of each molded body in that deterioration of characteristics can be suppressed. Note that recovery sources of each resin composition and each molded body are not particularly limited.

### [Mixing step]

In the recycling method of the present invention, next, the recovered (meth)acrylic resin composition, an unused (meth)acrylic resin, and an unused fibrous glass filler are mixed to prepare a recycled (meth)acrylic resin composition.

A mixing method and mixing conditions at this time are not particularly limited, but the mixing method and the kneading method in preparation of the (meth)acrylic resin composition of the present invention can be suitably adopted.

Note that, in the mixing, an unused styrene copolymer, unused (meth)acrylic rubber particles, and unused other components can be further mixed in addition amounts preferably corresponding to the above-described contents, respectively.

One kind or two or more kinds may be mixed for each component.

In the present invention, the recycled (meth)acrylic resin composition prepared as described above or a recycled molded body containing the recycled (meth)acrylic resin composition can be subjected to the recovery step and the mixing step again to prepare a recycled (meth)acrylic resin composition that has been recycled a plurality of times. That is, the recycling method of the present invention can be performed by repeating the recovery step and the mixing step a plurality of times appropriately with a molding step and a using step interposed therebetween. The number of times of recycling at this time can be appropriately determined within a range in which a molded body containing a recycled (meth)acrylic resin composition that has been recycled a plurality of times exhibits excellent impact resistance, rigidity, and scattering preventing characteristics. For example, the number of times of recycling can be the same as the number of times of recovery in the recovered (meth)acrylic resin composition described above.

As described above, the recycled (meth)acrylic resin composition can be prepared. The resulting recycled (meth)acrylic resin composition can exhibit all of excellent impact resistance, rigidity, and scattering preventing characteristics when formed into a molded body.

The recycling method of the present invention may include another step in addition to the recovery step and the mixing step. Examples of the other step include a step of washing a recovered (meth)acrylic resin composition or molded body, a step of pulverizing a recovered molded body, and a step of molding a prepared recycled (meth)acrylic resin composition.

Note that the molding step is not particularly limited, and is similar to the method for producing a molded body of the present invention except that the recycled (meth)acrylic resin composition of the present invention is used.

### EXAMPLES

Hereinafter, Examples of the present invention will be described, but the present invention is not limited thereto.

### [Preparation, synthesis, or preparation of (unused) (meth)acrylic resin]

### <Preparation of methacrylic resin PM1>

As a methacrylic resin PM1, a commercially available product ALTUGLAS HT121 (trade name, manufactured by ARKEMA) was used. Hereinafter, the methacrylic resin PM1 is referred to as a methacrylic resin HT121.

### <Synthesis of methacrylic resin PM2>

In a 5 L autoclave equipped with a stirrer, 1.3 parts by mass of methacrylic acid (hereinafter referred to as "MAA", manufactured by NIPPON SHOKUBAI CO., LTD.) and 98.7 parts by mass of methyl methacrylate (hereinafter, referred to as "MMA", manufactured by SUMITOMO CHEMICAL COMPANY, LIMITED) were mixed to obtain a monomer mixture. To this monomer mixture, 0.4 parts by mass of lauryl peroxide (Laurox K (trade name), manufactured by Kayaku Akzo Corporation) as a polymerization initiator and 0.34 parts by mass of 1-dodecyl mercaptan as a chain transfer agent were added with respect to 100 parts by mass of the total of the monomer mixture, and were dissolved therein. Furthermore, 0.060 parts by mass of hydroxyethyl cellulose (SANHEC H (trade name), manufactured by Sansho Co., Ltd.) as a suspension stabilizer was dissolved in deionized water with respect to 100 parts by mass of the total of the monomer mixture to form a suspension polymerization aqueous phase. Then, 150 parts by mass of an aqueous phase was added with respect to 100 parts by mass of the total of the above-described monomer mixture, and the resulting mixture was subjected to suspension polymerization at 60°C.

The resulting slurry-like reaction solution was dehydrated and washed twice with 40 L of deionized water using a dehydrator (centrifuge H-122 (trade name), manufactured by Kokusan Co., Ltd.), and then dried to obtain a bead-shaped polymer composition. With this bead-shaped polymer composition, 0.05 parts by mass of a phosphorus-based antioxidant (Irgafos 168 (trade name), manufactured by BASF Japan Ltd.) with respect to 100 parts by mass of the polymer composition was blended, and the resulting blend was melt-kneaded under the following kneading conditions using a twin screw extruder (model: TEX30SS-30AW-2V) manufactured by The Japan Steel Works, Ltd., extruded into a strand shape, cooled with water, and cut with a strand cutter to obtain a pellet-shaped methacrylic resin composition PM2.

### <Synthesis of methacrylic resin PM3>

Methyl methacrylate and methyl acrylate were polymerized to synthesize a methacrylic resin PM3.

### <Synthesis of methacrylic resin PM4>

Methyl methacrylate and methyl acrylate were polymerized to synthesize a methacrylic resin PM4.

### <Synthesis of methacrylic resin PM5>

Methyl methacrylate and methyl acrylate were polymerized to synthesize a methacrylic resin PM5.

### <Preparation of methacrylic resin PM6>

20 parts by mass of the methacrylic resin PM4 and 50 parts by mass of the methacrylic resin PM5 were mixed to obtain a methacrylic resin PM6 as a mixture.

### <Synthesis of methacrylic resin PM7>

Methyl methacrylate and methyl acrylate were polymerized to synthesize a methacrylic resin PM7.

For the prepared, synthesized, or prepared methacrylic resins PM1 to PM7, a nuclear magnetic resonance spectrum (¹³C-NMR) was measured under the following conditions, an integral value of each peak in the obtained NMR chart was taken, and a molar ratio of each component was calculated.

Specifically, the molar ratio was determined by measuring ¹³C-NMR with a nuclear magnetic resonance apparatus (manufactured by Bruker, Avance 600 (trade name), (10 mm cryoprobe)). Deuterated chloroform was used as a measurement solvent, and measurement was performed by an inverse gate proton decoupling method. Chloroform was used as a chemical shift value standard. The content of MMA was determined from an integral value of peaks at chemical shifts of 173.0 to 180.4 ppm. The content of MAA was determined from an integral value of peaks at chemical shifts of 180.4 to 188.0 ppm. The content of a glutaric anhydride structure formed by cyclocondensation of MMA and MAA was determined from an integral value of peaks at chemical shifts of 170.0 to 173.0 ppm. Results thereof are presented in Table 1.

### -Measurement conditions of nuclear magnetic resonance spectrum-

Resonance frequency: 400 MHz
Measurement temperature: 27°C
Pulse repeating time: 20 seconds
Number of integrations: 4000
Sample concentration: 300 mg/2.5 mL
Solvent: CDCl₃

### [Table 1]

**Table 1**

| Methacrylic resin | MA | MMA | MAA | Ring structure |
|---|---|---|---|---|
| PM1 | 0 | 95.5 | 4.0 | 0.5 |
| PM2 | 0 | 99.5 | 0.5 | 0 |
| PM3 | 1.4 | 98.6 | 0 | 0 |
| PM4 | 4.6 | 95.4 | 0 | 0 |
| PM5 | 0.9 | 99.1 | 0 | 0 |
| PM6 | 1. 9 | 98.1 | 0 | 0 |
| PM7 | 2.5 | 97.5 | 0 | 0 |

In Table 1, "MA" represents the content (unit: mol%) of a structural unit derived from methyl acrylate, "MMA" represents the content (unit: mol%) of a structural unit derived from methyl methacrylate, "MAA" represents the content (unit: mol%) of a structural unit derived from methacrylic acid, and "ring structure" represents the content (unit: mol%) of a structural unit containing a ring structure formed of glutaric anhydride.

### [Preparation of fibrous glass filler]

As the fibrous glass filler, the following fibrous glass filler was prepared.

### <Fibrous glass filler (T-289)>

ESC03T-289: trade name, chopped strand, fiber diameter 13 µm, fiber length 3.0 mm, circular cross section, manufactured by Nippon Electric Glass Co., Ltd.

### <Flat fibrous glass filler (T-480-FGF)>

ESC03T-480 FGF: trade name, chopped strand, fiber length 4.0 mm, major axis: 20 µm, minor axis: 5 µm, flattening ratio: 4.0, manufactured by Nippon Electric Glass Co., Ltd.

### [Preparation of styrene copolymer]

As a styrene copolymer, a resin of a styreneacrylonitrile copolymer (hereinafter, referred to as a "SAN resin", trade name: LITAC A 120PCF, manufactured by NIPPON A & L INC.) was prepared.

### [Production of (meth)acrylic rubber particles]

Spherical (meth)acrylic rubber particles having a three-layer structure were produced by an emulsion polymerization method.

In the synthesized (meth)acrylic rubber particles, an innermost layer was a hard polymer obtained by polymerizing a monomer composition containing 93.8% by mass of methyl methacrylate, 6.0% by mass of methyl acrylate, and 0.2% by mass of allyl methacrylate, an intermediate layer was an elastic polymer obtained by polymerizing a monomer composition containing 81% by mass of butyl acrylate, 17% by mass of styrene, and 2% by mass of allyl methacrylate, an outermost layer was a hard polymer obtained by polymerizing a monomer composition containing 94% by mass of methyl methacrylate and 6% by mass of methyl acrylate, a ratio of innermost layer/intermediate layer/outermost layer was 35% by mass/45% by mass/20% by mass, and the layer of the elastic polymer constituting the intermediate layer had a weight average particle diameter of 0.22 µm.

### [Examples 1 to 9 and Comparative Examples 1 to 8]

An (unused) (meth)acrylic resin composition was prepared using an unused (meth)acrylic resin, and an (unused) molded body (sheet) was prepared using the (meth)acrylic resin composition. These were evaluated.

### <Example 1>

80 parts by mass of the methacrylic resin PM1 and 20 parts by mass of the fibrous glass filler (T-289) were melt-kneaded under the following melt-kneading conditions using a single screw extruder (model: VS40, manufactured by TANABE PLASTIC CO., LTD.), extruded into a strand shape, cooled with water to be solidified, and cut with a strand cutter to obtain a pellet-shaped methacrylic resin composition (1).

Next, using the prepared methacrylic resin composition (1), injection molding (heat and cool molding) was performed under the following conditions to obtain a sheet-shaped molded body (1) having a thickness of 3 mm.

### -Melt-kneading conditions-

Regarding a temperature of the extruder, temperatures of five heaters disposed apart from each other between a raw material input port and an outlet were set to 200°C, 220°C, 230°C, 250°C, and 260°C from the raw material input port side, respectively. Kneading was performed at a screw rotation speed of 70 rpm.

### -Injection molding conditions-

Apparatus: NADEM2800II-DM (manufactured by MEIKI CO., LTD.)
Die: 248 mm × 198 mm × 3 mm
Injection speed: 30 mm/s
Injection pressure: 200 MPa
Rotation speed: 100 rpm
Holding pressure: 100 MPa
Die temperature (high temperature, at the time of injection): 140°C
Die temperature (low temperature, at the time of taking out): 70°C

### <Examples 2 to 9>

Pellet-shaped methacrylic resin compositions (2) to (9) were obtained in a similar manner to Example 1 except that the components (methacrylic resin, fibrous glass filler, SAN resin, and (meth)acrylic rubber particles) presented in Table 2-1 were mixed in the mass ratio presented in Table 2-1 in Example 1.

In addition, using the methacrylic resin compositions (2) to (9), injection molding was performed in a similar manner to Example 1 to obtain sheet-shaped molded bodies (2) to (9), respectively.

### <Comparative Examples 1 to 4 and 8>

Pellet-shaped methacrylic resin compositions (C1) to (C4) and (C8) were obtained in a similar manner to Example 1 except that the components (methacrylic resin, fibrous glass filler, and SAN resin) presented in Table 2-2 were mixed in the mass ratio presented in Table 2-2 in Example 1.

In addition, using the methacrylic resin compositions (C1) to (C4) and (C8), injection molding was performed in a similar manner to Example 1 to obtain sheet-shaped molded bodies (C1) to (C4) and (C8), respectively.

### <Comparative Examples 5 to 7>

Pellet-shaped methacrylic resin compositions (C5) to (C7) were obtained in a similar manner to Example 1 except that the components (methacrylic resin and (meth)acrylic rubber particles) presented in Table 2-2 were mixed in the mass ratio presented in Table 2-2 in Example 1.

In addition, using the methacrylic resin compositions (C5) to (C7), injection molding was performed in a similar manner to Example 1 to obtain sheet-shaped molded bodies (C5) to (C7), respectively.

### [Example 10 to 13 and Comparative Examples 9 and 10]

A methacrylic resin composition prepared using an unused methacrylic resin was recovered and mixed with an unused methacrylic resin and an unused fibrous glass filler (T-289) to prepare a recycled methacrylic resin composition. A recycled molded body (sheet) was prepared using a recycled methacrylic resin composition obtained by performing this step a predetermined number of times. The prepared recycled methacrylic resin composition and the prepared recycled molded body were evaluated.

### <Example 10>

A methacrylic resin composition (10-1) prepared as follows was recovered. Using this methacrylic resin composition (10-1) as a recovered methacrylic resin composition, the methacrylic resin composition (10-1) was mixed with an unused methacrylic resin and an unused fibrous glass filler (T-289) to prepare a recycled methacrylic resin composition (10-2) having the same composition as the prepared methacrylic resin composition (10-1) and having a recovered methacrylic resin composition content of 50% by mass.

Specifically, 4 parts by mass of the methacrylic resin PM1, 76 parts by mass of the methacrylic resin PM7, and 20 parts by mass of the fibrous glass filler (T-289) were melt-kneaded under the following melt-kneading conditions using a single screw extruder (model: VS40, manufactured by TANABE PLASTIC CO., LTD.), extruded into a strand shape, cooled with water to be solidified, and cut with a strand cutter to obtain the pellet-shaped methacrylic resin composition (10-1).

Next, the prepared pellet-shaped methacrylic resin composition (10-1) was recovered, and 50 parts by mass of the recovered methacrylic resin composition (10-1), 2 parts by mass of the methacrylic resin PM1, 38 parts by mass of the methacrylic resin PM7, and 10 parts by mass of the fibrous glass filler (T-289) were melt-kneaded under the following melt-kneading conditions using the above single screw extruder, extruded into a strand shape, cooled with water to be solidified, and cut with a strand cutter to obtain the pellet-shaped recycled methacrylic resin composition (10-2).

Using the obtained recycled methacrylic resin composition (10-2), injection molding (heat and cool molding) was performed under the following conditions to obtain a recycled sheet-shaped molded body (10) having a thickness of 3 mm.

### -Melt-kneading conditions-

Regarding a temperature of the extruder, temperatures of five heaters disposed apart from each other between a raw material input port and an outlet were set to 200°C, 220°C, 230°C, 250°C, and 260°C from the raw material input port side, respectively. Kneading was performed at a screw rotation speed of 70 rpm.

### -Injection molding conditions-

Apparatus: NADEM2800II-DM (manufactured by MEIKI CO., LTD.)
Die: 248 mm × 198 mm × 3 mm
Injection speed: 30 mm/s
Injection pressure: 200 MPa
Rotation speed: 100 rpm
Holding pressure: 100 MPa
Die temperature (high temperature, at the time of injection): 140°C
Die temperature (low temperature, at the time of taking out): 70°C

### <Example 11>

A methacrylic resin composition (11-1) prepared as follows was recovered. Using this methacrylic resin composition (11-1) as a recovered methacrylic resin composition, the methacrylic resin composition (11-1) was mixed with an unused methacrylic resin and an unused fibrous glass filler (T-289) to prepare a recycled methacrylic resin composition (11-2) having the same composition as the prepared methacrylic resin composition (11-1) and having a recovered methacrylic resin composition content of 50% by mass. This step was further performed four more times to prepare a recycled methacrylic resin composition (11-6) having the same composition as the methacrylic resin composition (11-1) and having a recovered methacrylic resin composition content of 50% by mass. In Example 11, each of the recycled methacrylic resin compositions (11-2) to (11-5) corresponds to an already-recycled (meth)acrylic resin composition used in the next step of preparing a recycled methacrylic resin composition.

Specifically, 4 parts by mass of the methacrylic resin PM1, 76 parts by mass of the methacrylic resin PM7, and 20 parts by mass of the fibrous glass filler (T-289) were melt-kneaded under the above melt-kneading conditions described in Example 10 using a single screw extruder (model: VS40, manufactured by TANABE PLASTIC CO., LTD.), extruded into a strand shape, cooled with water to be solidified, and cut with a strand cutter to obtain the pellet-shaped methacrylic resin composition (11-1).

Next, the prepared pellet-shaped methacrylic resin composition (11-1) was recovered, and 50 parts by mass of the recovered methacrylic resin composition (11-1), 2 parts by mass of the methacrylic resin PM1, 38 parts by mass of the methacrylic resin PM7, and 10 parts by mass of the fibrous glass filler (T-289) were melt-kneaded under the above melt-kneading conditions described in Example 10 using the above single screw extruder, extruded into a strand shape, cooled with water to be solidified, and cut with a strand cutter to obtain the pellet-shaped recycled methacrylic resin composition (11-2).

Furthermore, the prepared pellet-shaped recycled methacrylic resin composition (11-2) was recovered, and 50 parts by mass of the recovered methacrylic resin composition (11-2), 2 parts by mass of the methacrylic resin PM1, 38 parts by mass of the methacrylic resin PM7, and 10 parts by mass of the fibrous glass filler (T-289) were melt-kneaded under the above melt-kneading conditions described in Example 10 using the above single screw extruder, extruded into a strand shape, cooled with water to be solidified, and cut with a strand cutter to obtain the pellet-shaped recycled methacrylic resin composition (11-3).

Next, the prepared pellet-shaped recycled methacrylic resin composition (11-3) was recovered, and 50 parts by mass of the recovered methacrylic resin composition (11-3), 2 parts by mass of the methacrylic resin PM1, 38 parts by mass of the methacrylic resin PM7, and 10 parts by mass of the fibrous glass filler (T-289) were melt-kneaded under the above melt-kneading conditions described in Example 10 using the above single screw extruder, extruded into a strand shape, cooled with water to be solidified, and cut with a strand cutter to obtain the pellet-shaped recycled methacrylic resin composition (11-4).

Furthermore, the prepared pellet-shaped recycled methacrylic resin composition (11-4) was recovered, and 50 parts by mass of the recovered methacrylic resin composition (11-4), 2 parts by mass of the methacrylic resin PM1, 38 parts by mass of the methacrylic resin PM7, and 10 parts by mass of the fibrous glass filler (T-289) were melt-kneaded under the above melt-kneading conditions described in Example 10 using the above single screw extruder, extruded into a strand shape, cooled with water to be solidified, and cut with a strand cutter to obtain the pellet-shaped recycled methacrylic resin composition (11-5).

Next, the prepared pellet-shaped recycled methacrylic resin composition (11-5) was recovered, and 50 parts by mass of the recovered methacrylic resin composition (11-5), 2 parts by mass of the methacrylic resin PM1, 38 parts by mass of the methacrylic resin PM7, and 10 parts by mass of the fibrous glass filler (T-289) were melt-kneaded under the above melt-kneading conditions described in Example 10 using the above single screw extruder, extruded into a strand shape, cooled with water to be solidified, and cut with a strand cutter to obtain the pellet-shaped recycled methacrylic resin composition (11-6).

Using the obtained recycled methacrylic resin composition (11-6), injection molding (heat and cool molding) was performed under the above injection molding conditions described in Example 10 to obtain a recycled sheet-shaped molded body (11) having a thickness of 3 mm.

### <Example 12>

A methacrylic resin composition (12-1) prepared as follows was recovered. Using this methacrylic resin composition (12-1) as a recovered methacrylic resin composition, the methacrylic resin composition (12-1) was mixed with an unused methacrylic resin and an unused fibrous glass filler (T-289) to prepare a recycled methacrylic resin composition (12-2) having the same composition as the prepared methacrylic resin composition (12-1) and having a recovered methacrylic resin composition content of 70% by mass.

Specifically, 4 parts by mass of the methacrylic resin PM1, 76 parts by mass of the methacrylic resin PM7, and 20 parts by mass of the fibrous glass filler (T-289) were melt-kneaded under the above melt-kneading conditions described in Example 10 using a single screw extruder (model: VS40, manufactured by TANABE PLASTIC CO., LTD.), extruded into a strand shape, cooled with water to be solidified, and cut with a strand cutter to obtain the pellet-shaped methacrylic resin composition (12-1).

Next, the prepared pellet-shaped methacrylic resin composition (12-1) was recovered, and 70 parts by mass of the recovered methacrylic resin composition (12-1), 1.2 parts by mass of the methacrylic resin PM1, 22.8 parts by mass of the methacrylic resin PM7, and 6 parts by mass of the fibrous glass filler (T-289) were melt-kneaded under the above melt-kneading conditions described in Example 10 using the above single screw extruder, extruded into a strand shape, cooled with water to be solidified, and cut with a strand cutter to obtain the pellet-shaped recycled methacrylic resin composition (12-2).

Using the obtained recycled methacrylic resin composition (12-2), injection molding (heat and cool molding) was performed under the above injection molding conditions described in Example 10 to obtain a recycled sheet-shaped molded body (12) having a thickness of 3 mm.

### <Example 13>

A methacrylic resin composition (13-1) prepared as follows was recovered. Using this methacrylic resin composition (13-1) as a recovered methacrylic resin composition, the methacrylic resin composition (13-1) was mixed with an unused methacrylic resin and an unused fibrous glass filler (T-289) to prepare a recycled methacrylic resin composition (13-2) having the same composition as the prepared methacrylic resin composition (13-1) and having a recovered methacrylic resin composition content of 70% by mass. This step was further performed four more times to prepare a recycled methacrylic resin composition (13-6) having the same composition as the methacrylic resin composition (11-1) and having a recovered methacrylic resin composition content of 70% by mass. In Example 13, each of the recycled methacrylic resin compositions (13-2) to (13-5) corresponds to an already-recycled (meth)acrylic resin composition used in the next step of preparing a recycled methacrylic resin composition.

Specifically, 4 parts by mass of the methacrylic resin PM1, 76 parts by mass of the methacrylic resin PM7, and 20 parts by mass of the fibrous glass filler (T-289) were melt-kneaded under the above melt-kneading conditions described in Example 10 using a single screw extruder (model: VS40, manufactured by TANABE PLASTIC CO., LTD.), extruded into a strand shape, cooled with water to be solidified, and cut with a strand cutter to obtain the pellet-shaped methacrylic resin composition (13-1).

Next, the prepared pellet-shaped methacrylic resin composition (13-1) was recovered, and 70 parts by mass of the recovered methacrylic resin composition (13-1), 1.2 parts by mass of the methacrylic resin PM1, 22.8 parts by mass of the methacrylic resin PM7, and 6 parts by mass of the fibrous glass filler (T-289) were melt-kneaded under the above melt-kneading conditions described in Example 10 using the above single screw extruder, extruded into a strand shape, cooled with water to be solidified, and cut with a strand cutter to obtain the pellet-shaped recycled methacrylic resin composition (13-2).

Furthermore, the prepared pellet-shaped recycled methacrylic resin composition (13-2) was recovered, and 70 parts by mass of the recovered methacrylic resin composition (13-2), 1.2 parts by mass of the methacrylic resin PM1, 22.8 parts by mass of the methacrylic resin PM7, and 6 parts by mass of the fibrous glass filler (T-289) were melt-kneaded under the above melt-kneading conditions described in Example 10 using the above single screw extruder, extruded into a strand shape, cooled with water to be solidified, and cut with a strand cutter to obtain the pellet-shaped recycled methacrylic resin composition (13-3).

Next, the prepared pellet-shaped recycled methacrylic resin composition (13-3) was recovered, and 70 parts by mass of the recovered methacrylic resin composition (13-3), 1.2 parts by mass of the methacrylic resin PM1, 22.8 parts by mass of the methacrylic resin PM7, and 6 parts by mass of the fibrous glass filler (T-289) were melt-kneaded under the above melt-kneading conditions described in Example 10 using the above single screw extruder, extruded into a strand shape, cooled with water to be solidified, and cut with a strand cutter to obtain the pellet-shaped recycled methacrylic resin composition (13-4).

Furthermore, the prepared pellet-shaped recycled methacrylic resin composition (13-4) was recovered, and 70 parts by mass of the recovered methacrylic resin composition (13-4), 1.2 parts by mass of the methacrylic resin PM1, 22.8 parts by mass of the methacrylic resin PM7, and 6 parts by mass of the fibrous glass filler (T-289) were melt-kneaded under the above melt-kneading conditions described in Example 10 using the above single screw extruder, extruded into a strand shape, cooled with water to be solidified, and cut with a strand cutter to obtain the pellet-shaped recycled methacrylic resin composition (13-5).

Next, the prepared pellet-shaped recycled methacrylic resin composition (13-5) was recovered, and 70 parts by mass of the recovered methacrylic resin composition (13-5), 1.2 parts by mass of the methacrylic resin PM1, 22.8 parts by mass of the methacrylic resin PM7, and 6 parts by mass of the fibrous glass filler (T-289) were melt-kneaded under the above melt-kneading conditions described in Example 10 using the above single screw extruder, extruded into a strand shape, cooled with water to be solidified, and cut with a strand cutter to obtain the pellet-shaped recycled methacrylic resin composition (13-6).

Using the obtained recycled methacrylic resin composition (13-6), injection molding (heat and cool molding) was performed under the above injection molding conditions described in Example 10 to obtain a recycled sheet-shaped molded body (13) having a thickness of 3 mm.

### <Comparative Example 9>

A methacrylic resin composition (C9-1) prepared as follows was recovered. Using this methacrylic resin composition (C9-1) as it was as a recovered methacrylic resin composition, a recycled methacrylic resin composition (C9-2) having the same composition as the prepared methacrylic resin composition (C9-1) and having a recovered methacrylic resin composition content of 100% by mass was prepared.

Specifically, 4 parts by mass of the methacrylic resin PM1, 76 parts by mass of the methacrylic resin PM7, and 20 parts by mass of the fibrous glass filler (T-289) were melt-kneaded under the above melt-kneading conditions described in Example 10 using a single screw extruder (model: VS40, manufactured by TANABE PLASTIC CO., LTD.), extruded into a strand shape, cooled with water to be solidified, and cut with a strand cutter to obtain the pellet-shaped methacrylic resin composition (C9-1).

Next, the prepared pellet-shaped methacrylic resin composition (C9-1) was recovered, and the recovered methacrylic resin composition (C9-1) was melt-kneaded again under the above melt-kneading conditions described in Example 10 using the above single screw extruder, extruded into a strand shape, cooled with water to be solidified, and cut with a strand cutter to obtain the pellet-shaped recycled methacrylic resin composition (C9-2).

Using the obtained recycled methacrylic resin composition (C9-2), injection molding (heat and cool molding) was performed under the above injection molding conditions described in Example 10 to obtain a recycled sheet-shaped molded body (C9) having a thickness of 3 mm.

### <Comparative Example 10>

A methacrylic resin composition (C10-1) prepared as follows was recovered. Using this methacrylic resin composition (C10-1) as it was as a recovered methacrylic resin composition, a recycled methacrylic resin composition (C10-2) having the same composition as the prepared methacrylic resin composition (10-1) and having a recovered methacrylic resin composition content of 100% by mass was prepared. This step was further performed four more times to prepare a recycled methacrylic resin composition (C10-6) having the same composition as the methacrylic resin composition (C10-1) and having a recovered methacrylic resin composition content of 100% by mass.

Specifically, 4 parts by mass of the methacrylic resin PM1, 76 parts by mass of the methacrylic resin PM7, and 20 parts by mass of the fibrous glass filler (T-289) were melt-kneaded under the above melt-kneading conditions described in Example 10 using a single screw extruder (model: VS40, manufactured by TANABE PLASTIC CO., LTD.), extruded into a strand shape, cooled with water to be solidified, and cut with a strand cutter to obtain the pellet-shaped methacrylic resin composition (C10-1).

Next, the prepared pellet-shaped methacrylic resin composition (C10-1) was recovered, and the recovered methacrylic resin composition (C10-1) was melt-kneaded again under the above melt-kneading conditions described in Example 10 using the above single screw extruder, extruded into a strand shape, cooled with water to be solidified, and cut with a strand cutter to obtain the pellet-shaped recycled methacrylic resin composition (C10-2).

Furthermore, the prepared pellet-shaped recycled methacrylic resin composition (C10-2) was recovered, and the recovered methacrylic resin composition (C10-2) was melt-kneaded again under the above melt-kneading conditions described in Example 10 using the above single screw extruder, extruded into a strand shape, cooled with water to be solidified, and cut with a strand cutter to obtain the pellet-shaped recycled methacrylic resin composition (C10-3).

Next, the prepared pellet-shaped recycled methacrylic resin composition (C10-3) was recovered, and the recovered methacrylic resin composition (C10-3) was melt-kneaded again under the above melt-kneading conditions described in Example 10 using the above single screw extruder, extruded into a strand shape, cooled with water to be solidified, and cut with a strand cutter to obtain the pellet-shaped recycled methacrylic resin composition (C10-4).

Furthermore, the prepared pellet-shaped recycled methacrylic resin composition (C10-4) was recovered, and the recovered methacrylic resin composition (C10-4) was melt-kneaded again under the above melt-kneading conditions described in Example 10 using the above single screw extruder, extruded into a strand shape, cooled with water to be solidified, and cut with a strand cutter to obtain the pellet-shaped recycled methacrylic resin composition (C10-5).

Next, the prepared pellet-shaped recycled methacrylic resin composition (C10-5) was recovered, and the recovered methacrylic resin composition (C10-5) was melt-kneaded again under the above melt-kneading conditions described in Example 10 using the above single screw extruder, extruded into a strand shape, cooled with water to be solidified, and cut with a strand cutter to obtain the pellet-shaped recycled methacrylic resin composition (C10-6).

Using the obtained recycled methacrylic resin composition (C10-6), injection molding (heat and cool molding) was performed under the above injection molding conditions described in Example 10 to obtain a recycled sheet-shaped molded body (C10) having a thickness of 3 mm.

Using each of the prepared sheet-shaped molded bodies, scattering preventing characteristics, impact resistance, and rigidity were evaluated. In addition, a (meth)acrylic resin composition was decomposed and recovered using each of the prepared sheet-shaped molded bodies.

Note that each of the sheet-shaped molded bodies of Examples 1 to 13 had a smooth surface and a mirror surface.

### [Evaluation of scattering preventing characteristics]

Using each sheet-shaped molded body, a scattering prevention test was performed by a DuPont falling weight test (1 kg load, 1 m height). Note that a test piece was cut into a square of 5 cm in an MD direction and 5 cm in a TD direction. Here, the MD direction is a direction parallel to a flow direction of a (meth)acrylic resin composition during injection molding, and the TD direction is a direction perpendicular to the flow direction of the (meth)acrylic resin composition during injection molding.

In evaluation of the scattering preventing characteristics, a case where large fragments were not scattered was evaluated as "OK" (pass), and a case where large fragments were scattered was evaluated as" NG" (fail). Results thereof are presented in Tables 2-1 and 2-2 (also referred to as "Table 2").

### [Evaluation of impact resistance]

After each sheet-shaped molded body was notched using a notching machine (manufactured by Ueshima Seisakusho Co., Ltd.), Charpy impact strength (kJ/m²) of each sheet-shaped molded body was measured in accordance with JIS K 7111-1 using a Charpy impact tester DG-CB (model: manufactured by Toyo Seiki Seisaku-sho, Ltd.).

Specifically, an impact test was performed in parallel with a width direction of an edgewise test piece, and conditions of A-notch as a notch shape, a tip radius of 0.25 mm ± 0.05 mm, and a remaining width after notch of 8 mm ± 0.2 mm were adopted. Note that a cutout direction (longitudinal direction) of the test piece was the MD direction.

The measured Charpy impact strength (kJ/m²) was evaluated as impact resistance (strength) of each sheet-shaped molded body. In this evaluation, the larger the Charpy impact strength, the better the impact resistance, and in the present invention, the Charpy impact strength is preferably 3.0 kJ/m² or more. Results thereof are presented in Table 2.

### [Evaluation of rigidity]

The flexural modulus (MPa) of each sheet-shaped molded body was measured in accordance with JIS K 7171 using an automatic tensile/bending composite tester (manufactured by A & D Co., Ltd.). The measured flexural modulus (MPa) was evaluated as rigidity of each sheet-shaped molded body. Note that a cutout direction of the test piece was the MD direction.

In this evaluation, the larger the flexural modulus, the better the rigidity, and in the present invention, the flexural modulus is preferably 4000 MPa or more. Results thereof are presented in Table 2.

### [Decomposition and recovery]

Each prepared sheet-shaped molded body was decomposed and recovered, and whether or not a methyl methacrylate (MMA) component could be recovered (chemical recyclability) was evaluated.

Specifically, each sheet-shaped molded body was thermally decomposed in a tubular furnace at 450°C for ten minutes, a generated decomposition product was measured by GC-MS, and a detection component was qualitatively determined. In this thermal decomposition, a volatile component was generated, and a black solid material remained on a combustion board in the tubular furnace.

As a result of measuring the volatile component by GC-MS, a case where a recovered main component was a methyl methacrylate (MMA) component, and the MMA component could be separated from the fibrous glass filler was evaluated as "OK" (pass), and a case where the MMA component could not be separated from the fibrous glass filler was evaluated as "NG" (fail). Results thereof are presented in Table 2.

**[Table 2-1]**

| Table 2-1 | | | Example | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Methacrylic resin | PM1 (parts by mass) | | 80 | 70 | 60 | | 16 | 20 | 4 | 0.8 | 0.4 | 4 | 4 | 4 | 4 |
| | PM2 (parts by mass) | | | | | 80 | | | | | | | | | |
| | PM3 (parts by mass) | | | | | | | | | | | | | | |
| | PM6 (parts by mass) | | | | | | | | | | | | | | |
| | PM7 (parts by mass) | | | | | | | | 76 | 79.2 | 79.6 | 76 | 76 | 76 | 76 |
| | Content (unit: mol%) of structural unit | MA | 0 | 0 | 0 | 0 | 0 | 0 | 2.375 | 2.475 | 2.4875 | 2.375 | 2.375 | 2.375 | 2.375 |
| | | MMA | 95.5 | 95.5 | 95.5 | 99.5 | 95.5 | 95.5 | 97.4 | 97.48 | 97.49 | 97.4 | 97.4 | 97.4 | 97.4 |
| | | MAA | 4 | 4 | 4 | 0.5 | 4 | 4 | 0.2 | 0.04 | 0.02 | 0.2 | 0.2 | 0.2 | 0.2 |
| | | Ring structure | 0.5 | 0.5 | 0.5 | 0 | 0.5 | 0.5 | 0.025 | 0.005 | 0.002 | 0.025 | 0.025 | 0.025 | 0.025 |
| (Meth)acrylic rubber particles (parts by mass) | | | | | | | | 60 | | | | | | | |
| SAN resin (parts by mass) | | | | | | | 64 | | | | | | | | |
| Fibrous glass filler (parts by mass) | | | 20 | 30 | 40 | 20 | 20 | 20 | 20 | 20 | 20 | 20 | 20 | 20 | 20 |
| Presence or absence of methacrylic acid (MAA) | | | ○ | ○ | ○ | ○ | ○ | ○ | ○ | ○ | ○ | ○ | ○ | ○ | ○ |
| Evaluation result | DuPont falling weight test | | OK | OK | OK | OK | OK | OK | OK | OK | OK | OK | OK | OK | OK |
| | Charpy impact strength | | 6.2 | 8.5 | 9.8 | 5.0 | 5.5 | 8.6 | 6. 6 | 5.6 | 5.2 | 6.2 | 6.1 | 6.0 | 5.4 |
| | Flexural modulus | | 7100 | 8500 | 9800 | 6700 | 7100 | 4800 | 6500 | 6900 | 6900 | 6900 | 6700 | 6600 | 6300 |
| | Separation and recovery test | | OK | OK | OK | OK | OK | OK | OK | OK | OK | OK | OK | OK | OK |

**[Table 2-2]**

| Table 2-2 | | | Comparative Example | | | | | | | | | |
|---|---|---|---|---|---|---|---|---|---|---|---|---|
| | | | 1 | 2 | 3 | 4 | 5 | 6 | 7 | 8 | 9 | 10 |
| Methacrylic resin | PM1 (parts by mass) | | | | | | 100 | | | 0.2 | 4 | 4 |
| | PM2 (parts by mass) | | | | | | | | | | | |
| | PM3 (parts by mass) | | 80 | 70 | 60 | 16 | | 100 | | | | |
| | PM6 (parts by mass) | | | | | | | | 70 | | | |
| | PM7 (parts by mass) | | | | | | | | | 79.8 | 76 | 76 |
| | Content (unit: mol%) of structural unit | MA | 1.4 | 1.4 | 1.4 | 1.4 | 0 | 1.4 | 1.9 | 2.494 | 2.375 | 2.375 |
| | | MMA | 98.6 | 98.6 | 98.6 | 98.6 | 95.5 | 98.6 | 98.1 | 97.495 | 97.4 | 97.4 |
| | | MAA | 0 | 0 | 0 | 0 | 4 | 0 | 0 | 0.01 | 0.2 | 0.2 |
| | | Ring structure | 0 | 0 | 0 | 0 | 0.5 | 0 | 0 | 0.001 | 0.025 | 0.025 |
| (Meth)acrylic rubber particles (parts by mass) | | | | | | | | | 30 | | | |
| SAN resin (parts by mass) | | | | | | 64 | | | | | | |
| Fibrous glass filler (parts by mass) | | | 20 | 30 | 40 | 20 | 0 | 0 | 0 | 20 | 20 | 20 |
| Presence or absence of methacrylic acid (MAA) | | | × | × | × | × | ○ | × | × | ○ | ○ | ○ |
| Evaluation result | DuPont falling weight test | | NG | NG | NG | NG | NG | NG | NG | NG | NG | NG |
| | Charpy impact strength | | 4.3 | 5.7 | 6.9 | 5.1 | 1.4 | 1.4 | 3.8 | 4.8 | 5.3 | 3.1 |
| | Flexural modulus | | 6600 | 8000 | 9500 | 7000 | 3400 | 3100 | 2500 | 6600 | 5200 | 4900 |
| | Separation and recovery test | | OK | OK | OK | OK | OK | OK | OK | OK | OK | OK |

In Table 2, "content (mol%) of structural unit" represents the content (mol%) of each structural unit in all structural units of the methacrylic resin, "MA" represents the content of a structural unit derived from methyl acrylate, "MMA" represents the content of a structural unit derived from methyl methacrylate, "MAA" represents the content of a structural unit derived from methacrylic acid, and "ring structure" represents the content of a structural unit containing a ring structure formed of glutaric anhydride.

In Table 2, regarding a contained component in the methacrylic resin composition, the blank indicates that the content of a corresponding contained component in the composition is 0% by mass.

### [Example 14]

An (unused) (meth)acrylic resin composition was prepared using an unused (meth)acrylic resin and an unused flat fibrous glass filler (T-480-FGF), and an (unused) molded body (sheet) was prepared using the (meth)acrylic resin composition. These were evaluated.

Specifically, a pellet-shaped methacrylic resin composition (14) was obtained in a similar manner to Example 1 except that a flat fibrous glass filler (T-480-FGF) was used instead of the fibrous glass filler (T-289) in Example 1.

Next, using the prepared methacrylic resin composition (14), injection molding was performed in a similar manner to Example 1 to obtain a sheet-shaped molded body (14). The sheet-shaped molded body (14) had a smooth surface and a mirror surface.

For the prepared sheet-shaped molded body (14), scattering preventing characteristics, impact resistance, and rigidity were evaluated in a similar manner to Example 1. In addition, a (meth)acrylic resin composition was decomposed and recovered using the prepared sheet-shaped molded body (14). Note that, in the evaluation of impact resistance and the evaluation of rigidity, as cutout directions of a test piece, two directions of the MD direction and the TD direction were used, and two kinds of test pieces having different cutout directions were prepared. Here, the MD direction is a direction parallel to a flow direction of a (meth)acrylic resin composition during injection molding, and the TD direction is a direction perpendicular to the flow direction of the (meth)acrylic resin composition during injection molding.

Results of the evaluations are presented in Table 3 together with the results of Example 1.

**[Table 3]**

| Table 3 | | Example 1 | | Example 14 | |
|---|---|---|---|---|---|
| | | TD | MD | TD | MD |
| | DuPont falling weight test | OK | | OK | |
| Evaluation result | Charpy impact strength | 3.7 | 6.2 | 3.4 | 3.3 |
| | Flexural modulus | 4200 | 7100 | 4600 | 5300 |
| | Separation and recovery test | OK | | OK | |

In Table 3, in the "Charpy impact strength" column and in the "flexural modulus" column, a measurement result of a test piece cut out in the TD direction is presented in the "TD" column, and a measurement result of a test piece cut out in the MD direction is presented in the "MD" column.

The following can be seen from the results presented in Tables 1 to 3.

A methacrylic resin composition that does not contain a methacrylic resin having a structural unit derived from methacrylic acid and a fibrous glass filler cannot exhibit all of impact resistance, rigidity, and scattering preventing characteristics. That is, in the methacrylic resin compositions (Comparative Examples 1 to 3) which contained a fibrous glass filler but in which a methacrylic resin had no structural unit derived from methacrylic acid, each sheet-shaped molded body was broken (cracked) and large fragments having sharp edges were scattered in the DuPont falling weight test, and scattering preventing characteristics were poor. In addition, the methacrylic resin composition (Comparative Example 4) which contained a fibrous glass filler and a styrene copolymer but in which a methacrylic resin had no structural unit derived from methacrylic acid had poor scattering preventing characteristics. Furthermore, in the methacrylic resin composition (Comparative Example 8) which contained a fibrous glass filler but in which the content of a structural unit derived from methacrylic acid in a methacrylic resin was too small, each sheet-shaped molded body was cracked and large fragments having sharp edges were scattered in the DuPont falling weight test, and scattering preventing characteristics were poor. On the other hand, in the methacrylic resin compositions (Comparative Examples 5 to 7) which contained no fibrous glass filler, even though a methacrylic resin had a structural unit derived from methacrylic acid, each sheet-shaped molded body was broken (cracked) and large fragments having sharp edges were scattered in the DuPont falling weight test, and at least one of impact resistance and rigidity was poor.

In the recycled methacrylic resin compositions (Comparative Examples 9 and 10) prepared by directly melt-mixing a recovered methacrylic resin composition obtained by recovering a prepared (unused) methacrylic resin composition without mixing the recovered methacrylic resin composition with unused components, each sheet-shaped molded body was broken (cracked) and large fragments having sharp edges were scattered regardless of the number of times of recovery in the DuPont falling weight test. In addition, in the recycled methacrylic resin composition (C10-6) of Comparative Example 10 in which the number of times of recovery was set to six, the amount of decrease in Charpy impact strength was large.

On the other hand, the methacrylic resin compositions (Example 1 to 9) containing a methacrylic resin having a structural unit derived from methacrylic acid and a fibrous glass filler within ranges of the contents specified in the present invention can exhibit all of impact resistance, rigidity, and scattering preventing characteristics.

In addition, in the recycled methacrylic resin compositions (Examples 10 to 13) prepared by mixing a recovered methacrylic resin composition obtained by recovering a prepared (unused) methacrylic resin composition with unused components at a ratio of 50 or 70% by mass with respect to the total mass of the mixed components, each sheet-shaped molded body is not cracked while excellent rigidity is maintained regardless of the number of times of recovery in the DuPont falling weight test, a decrease in Charpy impact strength can be suppressed, and as a result, all of impact resistance, rigidity, and scattering preventing characteristics similarly to the (unused) methacrylic resin composition can be exhibited. Note that, in Examples 11 and 13, measured values of Charpy impact strength and flexural modulus did not decrease even when the number of times of recovery was increased, and were almost the same values. Therefore, it could be confirmed that the recycled methacrylic resin compositions (11-2) to (11-5) and (13-2) to (13-5) were able to exhibit all of impact resistance, rigidity, and scattering preventing characteristics.

Furthermore, in Example 14 using the flat fibrous glass filler (T-480 FGF), it could be confirmed that a characteristic difference between a test piece cut out in the TD direction and a test piece cut out in the MD direction was smaller than that in Example 1 using the fibrous glass filler (T-289) having a substantially circular cross-sectional shape.

Moreover, in the methacrylic resin compositions (Examples 1 to 9 and 14) and the recycled methacrylic resin compositions (Examples 10 to 13), even if the resin compositions are formed into molded bodies, a methacrylate constituting a methacrylic resin can be recovered by heating the molded bodies to a predetermined temperature.

From the above results, it is found that the methacrylic resin composition of the present invention (unused methacrylic resin composition and recycled methacrylic resin composition) can be suitably used for various applications and alternative applications of various resins by utilizing the above excellent characteristics, and can also be subjected to material recycling and chemical recycling.

## Claims

1. A (meth)acrylic resin composition comprising:
a (meth)acrylic resin in which a content of a structural unit derived from a (meth)acrylate is 90 to 99.985 mol%, and a content of a structural unit derived from (meth)acrylic acid is 0.015 to 9.0 mol%, with respect to a total content 100 mol% of all structural units; and
a fibrous glass filler.

2. The (meth)acrylic resin composition according to claim 1, wherein the content of the structural unit derived from a (meth)acrylate is 90 to 99.0 mol%, and the content of the structural unit derived from (meth)acrylic acid is 0.1 to 9.0 mol%.

3. The (meth)acrylic resin composition according to claim 1, wherein a content of the fibrous glass filler is 1 to 40 parts by mass in 100 parts by mass of the (meth)acrylic resin composition.

4. The (meth)acrylic resin composition according to claim 1, wherein the fibrous glass filler has a fiber diameter of 3 to 25 µm and a fiber length of 0.1 to 10 mm.

5. The (meth)acrylic resin composition according to claim 1, wherein the fibrous glass filler has a fiber diameter of 3 to 25 µm and a fiber length of 0.5 to 10 mm.

6. The (meth)acrylic resin composition according to claim 1, wherein the fibrous glass filler contains a glass filler having a flat cross-sectional shape in which a ratio of a major axis to a minor axis [major axis/minor axis] in a cross section is 2.0 or more.

7. The (meth)acrylic resin composition according to claim 1, wherein the (meth)acrylic resin contains a ring structure formed of glutaric anhydride in a main chain, and a content of a structural unit containing the ring structure is 1.0 mol% or less with respect to a total of 100 mol% of all structural units of the (meth)acrylic resin.

8. The (meth)acrylic resin composition according to claim 1, wherein the (meth)acrylate is at least one selected from the group consisting of methyl (meth)acrylate, ethyl (meth)acrylate, n-propyl (meth)acrylate, iso-propyl (meth)acrylate, n-butyl (meth)acrylate, tert-butyl (meth)acrylate, sec-butyl (meth)acrylate, iso-butyl (meth)acrylate, and 2-ethylhexyl (meth)acrylate.

9. The (meth)acrylic resin composition according to claim 1, further comprising a styrene copolymer, wherein the styrene copolymer is a styrene-acrylonitrile copolymer or a styrene-acrylonitrile-phenylmaleimide copolymer.

10. The (meth)acrylic resin composition according to claim 1, further comprising (meth)acrylic rubber particles, wherein the (meth)acrylic rubber particles are spherical (meth)acrylic rubber particles having a three-layer structure including an inner layer formed of a hard polymer mainly containing an alkyl methacrylate, an intermediate layer formed of an elastic copolymer mainly containing an alkyl acrylate, and an outer layer formed of a hard polymer mainly containing an alkyl methacrylate.

11. A molded body comprising the (meth)acrylic resin composition according to any one of claims 1 to 10.

12. A car body comprising the (meth)acrylic resin composition according to any one of claims 1 to 10.

13. A method for producing a molded body by injection-molding the (meth)acrylic resin composition according to any one of claims 1 to 10, the method comprising: performing an injection step using a rapid heating and cooling die when a die cavity surface temperature is 110°C or higher; and performing a die opening step when the die cavity surface temperature is 80°C or lower.

14. A method for producing a molded body by extrusion-molding the (meth)acrylic resin composition according to any one of claims 1 to 10, the method comprising: a step of discharging a melt of the (meth)acrylic resin composition from the die; and a step of cooling the discharged melt to obtain a molded body.

15. A method for decomposing and recovering a (meth)acrylic resin composition, the method comprising decomposing the (meth)acrylic resin composition according to any one of claims 1 to 10 at a temperature of 380°C or higher to separate a volatile component and a solid material from each other, thereby recovering a (meth)acrylate.

16. A recycled (meth)acrylic resin composition comprising: the (meth)acrylic resin composition according to any one of claims 1 to 10 or a molded body thereof or a (meth)acrylic resin composition recovered from the following already-recycled (meth)acrylic resin composition or a molded body thereof, an unused (meth)acrylic resin, and an unused fibrous glass filler.
<Already-recycled (meth)acrylic resin composition>
An already-recycled (meth)acrylic resin composition comprising a (meth)acrylic resin composition recovered from the (meth)acrylic resin composition according to any one of claims 1 to 10 or a molded body thereof, an unused (meth)acrylic resin, and an unused fibrous glass filler.

17. The recycled (meth)acrylic resin composition according to claim 16, wherein the unused (meth)acrylic resin contained in the recycled (meth)acrylic resin composition contains a (meth)acrylic resin in which a content of a structural unit derived from a (meth)acrylate is 90 to 99.985 mol%, and a content of a structural unit derived from (meth)acrylic acid is 0.015 to 9.0 mol%, with respect to 100 mol% of a total content of all structural units.

18. The recycled (meth)acrylic resin composition according to claim 16, wherein a content of a fibrous glass filler contained in the recovered (meth)acrylic resin composition in 100 parts by mass of the recovered (meth)acrylic resin composition is equal to a content of the unused fibrous glass filler in 100 parts by mass of a total of the unused (meth)acrylic resin and the unused fibrous glass filler in the recycled (meth)acrylic resin composition.

19. The recycled (meth)acrylic resin composition according to claim 16, wherein a content of the unused fibrous glass filler is 1 to 40 parts by mass in 100 parts by mass of a total of the unused (meth)acrylic resin and the unused fibrous glass filler in the recycled (meth)acrylic resin composition.

20. The recycled (meth)acrylic resin composition according to claim 16, wherein
in 100% by mass of the recycled (meth)acrylic resin composition,
a content of the recovered (meth)acrylic resin composition is 1 to 99% by mass, and
a total content of the unused (meth)acrylic resin and the unused fibrous glass filler is 1 to 99% by mass.

21. A recycling method for recycling a (meth)acrylic resin composition or a (meth)acrylic resin composition forming a molded body, the method comprising:
recovering a (meth)acrylic resin composition from the (meth)acrylic resin composition according to any one of claims 1 to 10 or a molded body thereof or from the following already-recycled (meth)acrylic resin composition or a molded body thereof; and
mixing the recovered (meth)acrylic resin composition, an unused (meth)acrylic resin, and an unused fibrous glass filler.
<Already-recycled (meth)acrylic resin composition>
An already-recycled (meth)acrylic resin composition comprising a (meth)acrylic resin composition recovered from the (meth)acrylic resin composition according to any one of claims 1 to 10 or a molded body thereof, an unused (meth)acrylic resin, and an unused fibrous glass filler.
